# EUROPEAN PATENT SPECIFICATION

(11) **EP 2 270 352 B1**
(45) Date of publication and mention of the grant of the patent: **05.09.2012**
(21) Application number: 10167652.6
(22) Date of filing: 29.06.2010
(51) Int. Cl.: F16D 65/14, B23K 20/12

(54) **Disk brake**
Scheibenbremse
Frein à disque

(30) Priority: 30.06.2009 JP 2009155722
(43) Date of publication of application: 05.01.2011
(73) Proprietor: Hitachi Automotive Systems, Ltd., Hitachinaka-shi Ibaraki 312-8503 (JP)
(72) Inventor: Nanri, Keisuke, Kawasaki-shi Kanagawa 210-0011 (JP); Nagasawa, Junichi, Kawasaki-shi Kanagawa 210-0011 (JP); Kobayashi, Yuichi, Kawasaki-shi Kanagawa 210-0011 (JP); Matsui, Yoshimasa, Kawasaki-shi Kanagawa 210-0011 (JP)
(74) Representative: HOFFMANN EITLE

(56) References cited:
- EP-A1- 1 293 288
- EP-A1- 1 688 207
- EP-A1- 1 826 448
- EP-A1- 2 053 264
- JP-A- 11 197 855

## Description

### Technical field

The present invention relates to a method of manufacturing a disk brake for braking, for example, a vehicle.

### Background art

There is a disk brake formed by welding a cover member to a bottom of a bore of a hydraulic cylinder by friction stir welding (for example, refer to Japanese Patent Public Disclosure No. 2007-10136).

EP 1 688 207 A1 relates to a cylinder apparatus and disk brake which provides a cylinder apparatus wherein an opening of a cylinder body is closed by a covering member using friction welding. This document discloses a combination of features falling within the preamble of claim 1.

EP 1 826 448 A1 relates to a disk brake having a flange portion formed on the outer periphery of a portion of a caliper body main body where an opening is formed.

EP 2 053 264 A1 relates to a disk brake which is free from problems attributed to the observe-reverse orientation of a cover member as installed.

If friction stir welding method is employed to form a disk brake, the finish position of the friction stir welding is important in terms of the performance regarding a hydraulic pressure of the disk brake.

### Summary of the invention

According to the present invention, there is provided a method of manufacturing disk brake according to claim 1.

Due to this arrangement, it is possible to prevent a bulge generated from the friction stir welding from blocking a brake fluid flow through the communication passage. Further, it is possible to improve the pressure capacity of the caliper. Therefore, it is possible to provide a disk brake capable of reducing a problem with the performance regarding fluid pressure.

An embodiment of the methodaccording to claim 1, further has the features of claim 2.

Due to this arrangement, it is possible to prevent a bulge generated from the friction stir welding from blocking a brake fluid flow through the communication passage. Further, it is possible to improve the pressure capacity of the caliper. Therefore, it is possible to provide an opposed-4-pot-type disk brake capable of reducing a problem with the performance regarding fluid pressure.

In another embodiment of the method of claim 1, two cylinders are disposed at the cylinder portion at one face side of the disk so as to be arranged in the disk rotational direction, and the finish positions of the friction stir welding at the two cylinders are provided at a same position between the two cylinders in the disk rotational direction.

Due to this arrangement, it is possible to reduce the remaining holes of the friction stir welding to a one hole even with a pair of cylinders, thereby preventing the strength of the caliper body being weakened due to formation of remaining holes.

A further embodiment of the method according to claim 1, further comprises the features of claims 4. Due to this arrangement, it is possible to prevent a bulge generated from the friction stir welding from blocking a brake fluid flow through the communication passage. Further, it is possible to improve the pressure capacity of the caliper. Therefore, it is possible to provide an opposed-2-pot-type disk brake capable of reducing a problem with the performance regarding fluid pressure.

Further, in a still further embodiment of the method, the finish position of the friction stir welding at the cylinder is disposed at the cylinder or the center between the cylinders in the disk rotational direction. Therefore, it is possible to improve the design performance of the disk brake.

An advantage obtainable with embodiments of the present invention is to provide a disk brake having an optimized finish position of friction stir welding.

### Brief description of the drawings

To enable a better understanding of the present invention, and to show how the same may be carried into effect, reference will now be made, by way of example only, to the accompanying drawings, in which:
Fig. 1 is a top view illustrating a disk brake manufactured according to a first embodiment of the present invention;
Fig. 2 is a front view illustrating the disk brake manufactured according to the first embodiment of the present invention;
Fig. 3 is a bottom view illustrating the disk brake manufactured according to the first embodiment of the present invention;
Fig. 4 is a back view illustrating the disk brake manufactured according to the first embodiment of the present invention;
Fig. 5 is a side view illustrating the disk brake manufactured according to the first embodiment of the present invention;
Fig. 6 is a front view illustrating a caliper body main part of the disk brake manufactured according to the first embodiment of the present invention;
Fig. 7 is a cross-sectional view taken along the line A-A in Fig. 6, illustrating the caliper body main part of the disk brake manufactured according to the first embodiment of the present invention;
Fig. 8 is a cross-sectional view taken along the line B-B in Fig. 6, illustrating the caliper body main part of the disk brake manufactured according to the first embodiment of the present invention;
Figs. 9 illustrate a cover member of the disk brake manufactured according to the first embodiment of the present invention, and in particular, Fig. 9(a) is a front view and Fig. 9(b) is a side view;
Fig. 10 is side view illustrating a welding tool used for friction stir welding at the disk brake manufactured according to the first embodiment of the present invention;
Fig. 11 is a cross-sectional view corresponding a view taken along the line B-B in Fig. 6, illustrating a caliper body of the disk brake manufactured according to the first embodiment of the present invention;
Fig. 12 is a back view illustrating the caliper body of the disk brake manufactured according to the first embodiment of the present invention for use in a description of friction stir welding;
Fig. 13 is a back view illustrating a caliper body of a disk brake manufactured according to a second embodiment of the present invention for use in a description of friction stir welding;
Fig. 14 is a back view illustrating a caliper body of a disk brake manufactured according to a third embodiment of the present invention for use in a description of friction stir welding;
Fig. 15 is a front view illustrating a caliper body of a disk brake manufactured according to a fourth embodiment of the present invention for use in a description of friction stir welding;
Fig. 16 is a back view illustrating the caliper body of the disk brake manufactured according to the fourth embodiment of the present invention;
Fig. 17 is a front view illustrating a caliper body of a disk brake manufactured according to a fifth embodiment of the present invention for use in a description of friction stir welding; and
Fig. 18 is a back view illustrating the caliper body of the disk brake manufactured according to the fifth embodiment of the present invention.

Hereinafter, embodiments of the present invention will be described with reference to the accompanying drawings.

### [First Embodiment]

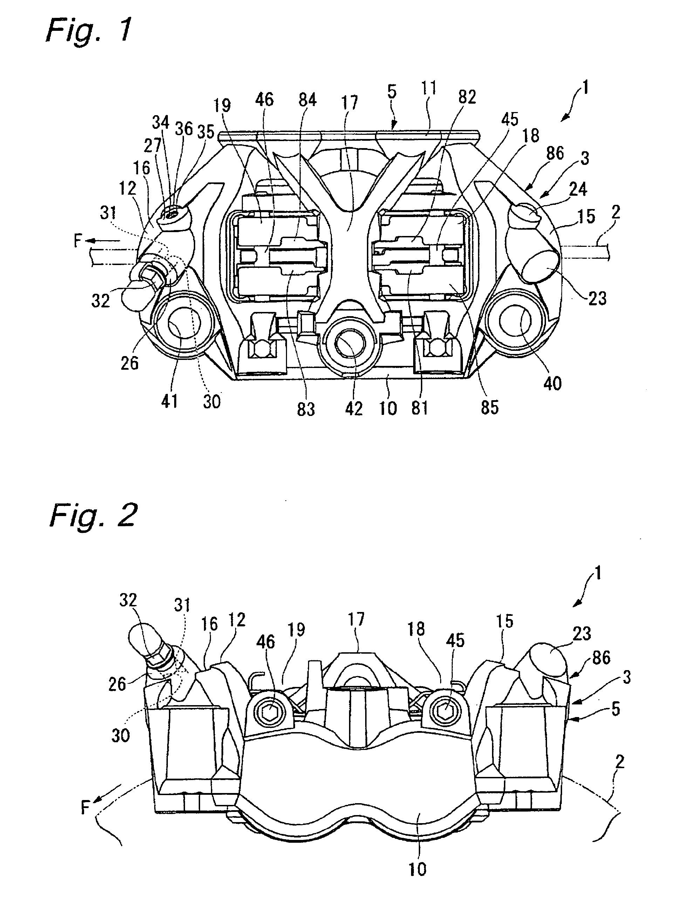

A first embodiment of the present invention will now be described with reference to Figs. 1 to 12.

A disk brake 1 manufactured according to the first embodiment is a disk brake for use in a two-wheeled vehicle. Figs. 1 to 9, 11 and 12 show a disk brake which is installed at the left side of a vehicle. As shown in Figs. 1 to 5, the disk brake 1 comprises a disk 2 rotatable together with a wheel (rotator) which the brake is applied to, and a caliper 3 for providing frictional resistance to the disk 2.

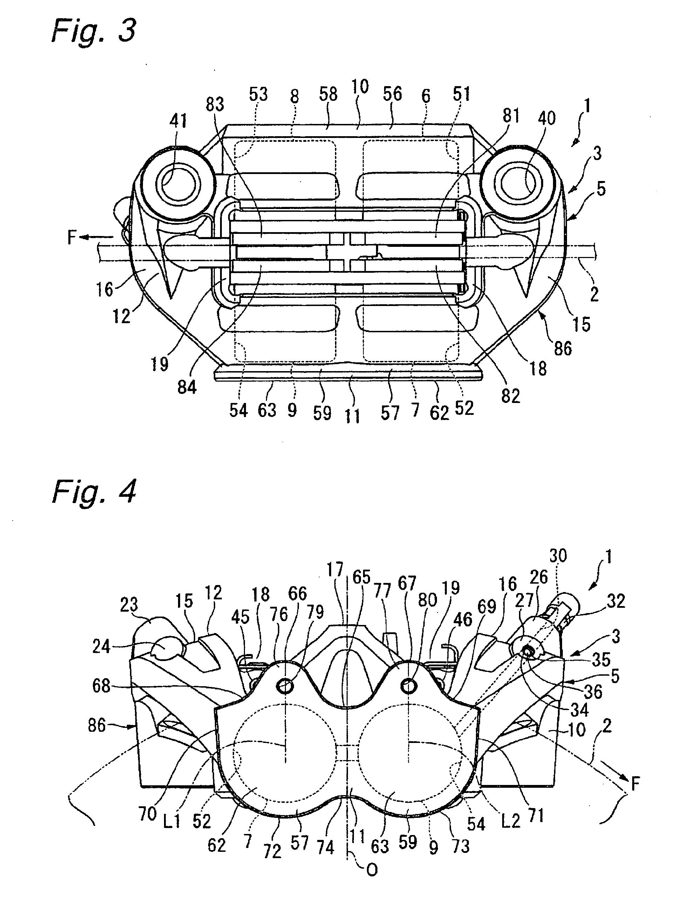

As shown in Fig. 1, a caliper 3 includes a caliper body 5 attached to a non-rotating portion of the vehicle (in the present embodiment, the rear side of the front fork of the two-wheeled vehicle) in such a manner that the caliper body 5 extends over the disk 2. As shown in Fig. 3, the caliper 3 further includes a plurality of pistons, in particular, four similarly shaped pistons 6 to 9. In the following, the disk brake 1 will be described based on the installed state thereof to the vehicle. The term "disk radial direction" is used to refer to the radial direction of the disk 2 in the installed state. The term "disk axial direction" is used to refer to the axial direction of the disk 2 in the installed state. The term "disk rotational direction" is used to refer to the rotational direction of the disk 2 in the installed state. In Figs. 1 to 4, the arrow F indicates the rotational direction of the disk 2 when the vehicle advances. The term "disk rotation entrance side" is used to refer to the entrance side with respect to the rotational direction of the disk 2 when the vehicle advances, and the term "disk rotation exit side" is used to refer to the exit side with respect to the rotational direction of the disk 2 when the vehicle advances.

As shown in Fig. 3, the piston 6 is disposed at the disk rotation entrance side and the disk outer side (the opposite side from the wheel) and the piston 7 is disposed at the disk rotation entrance side and the disk inner side (the wheel side) slidably relative to the caliper body 5 in such a manner that they sandwich the disk 2 therebetween, facing each other through the disk 2 so as to make a pair. The piston 8 is disposed at the disk rotation exit side and the disk outer side and the piston 9 is disposed at the disk rotation exit side and the disk inner side slidably relative to the caliper body 5 in such a manner that they sandwich the disk 2 therebetween, facing each other through the disk 2 so as to make a pair. Therefore, the caliper 3 is an opposed-piston-type 4 pot caliper having a plurality of pairs of pistons, in particular, the two pairs of similarly shaped pistons 6 to 9.

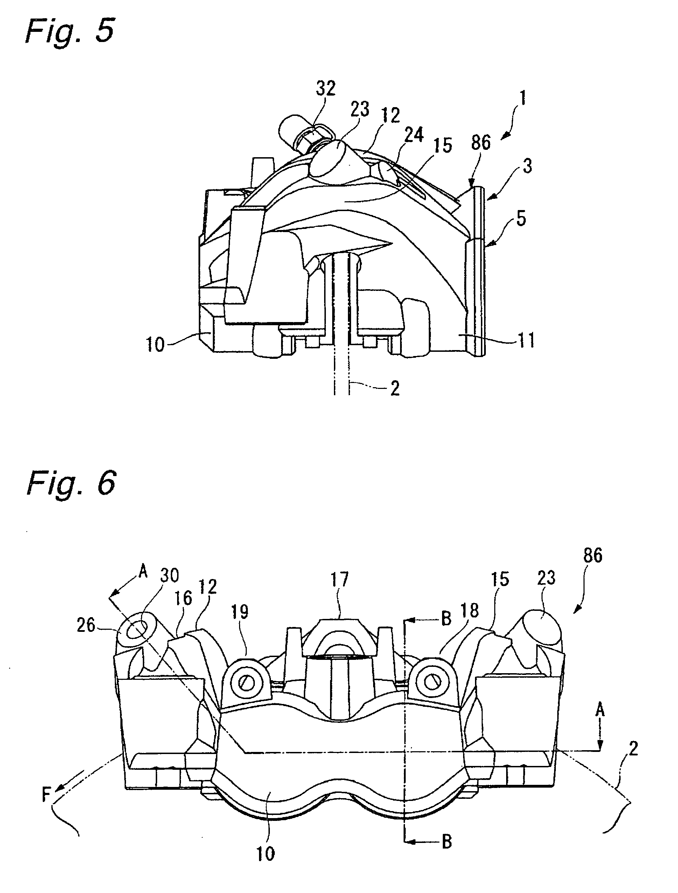

The caliper body 5 includes a cylinder portion 10 disposed at the outer side of the disk 2, and a cylinder portion 11 disposed at the inner side of the disk 2. As shown in Fig. 5, the cylinder portions 10 and 11 are connected with each other at the outer side of the disk radial direction of the disk 2 by a bridge portion 12 extending from the outer sides of the disk radial directions of the cylinder portions 10 and 11 to the outer circumferential side of the disk 2, thereby integrally forming the caliper body.

As shown in Fig. 1, the bridge portion 12 is constituted by a bridge constituting portion 15 disposed at the disk rotation entrance side, a bridge constituting portion 16 disposed at the disk rotation exit side, and a bridge constituting portion 17 disposed at a position between the bridge constituting portions 15 and 16 in the disk rotational direction. The bridge constituting portions 15 to 17 are disposed in a spaced-apart relationship in the disk rotational direction, whereby the bridge portion 12 includes an opening portion 18 penetrating in the disk radial direction at the disk rotation entrance side between the bridge constituting portions 15 and 17, and an opening side 19 penetrating in the disk radial direction at the disk rotation exit side between the bridge constituting portions 16 and 17.

As shown in Fig. 1, a substantially cylindrical passage protrusion 23, which protrudes in a state oriented toward the disk rotation entrance side, the disk outer side, and the outer side of the disk radial direction, is formed at the outer side of the disk radial direction of the bridge constituting portion 15 disposed at the disk rotation entrance side. A substantially cylindrical passage protrusion 24, which partially protrudes in a state oriented toward the disk rotation entrance side, the disk inner side, and the outer side of the disk rotational direction, is formed at the inner side of the passage protrusion 23.

A substantially cylindrical passage protrusion 26, which protrudes in a state oriented toward the disk rotation exit side, the disk outer side, and the outer side of the disk radial direction, is formed at the outer side of the disk radial direction of the bridge constituting portion 16 disposed at the disk rotation exit side. A substantially cylindrical passage protrusion 27, which partially protrudes in a state oriented toward the disk rotation exit side, the disk inner side, and the outer side of the disk rotational direction, is formed at the inner side of the passage protrusion 26.

As indicated by the dotted lines in Figs. 1, 2, and 12, bridge portion communication passages 30 and 34 extending through the bridge constituting portion 16 are formed as communication passages for establishing communication between the cylinder portions 10 and 11, at the bridge constituting portion 16 at the disk rotation exit side which becomes the upper side when the caliper 3 is installed on the vehicle. The bridge portion communication passage 30 is formed through the passage protrusion 26 of the bridge constituting portion 16 to extend along the orientation of the passage protrusion 26. A bleeder plug 32 for air bleeding is attached to an opening 31 open to the outside of the bridge communication passage 30. The bridge portion communication passage 34 is formed through the passage protrusion 27, which is another passage protrusion of the bridge constituting portion 16 at the disk rotation exit side, to extend along the orientation of the passage protrusion 27. A spherical blocking plug 36 for sealing is attached to an opening 35 open to the outside of the bridge portion communication passage 34. On the other hand, a communication passage is not formed through the passage protrusions 23 and 24 at the disk rotation entrance side, and therefore a bleeder plug and a blocking plug are not attached thereto.

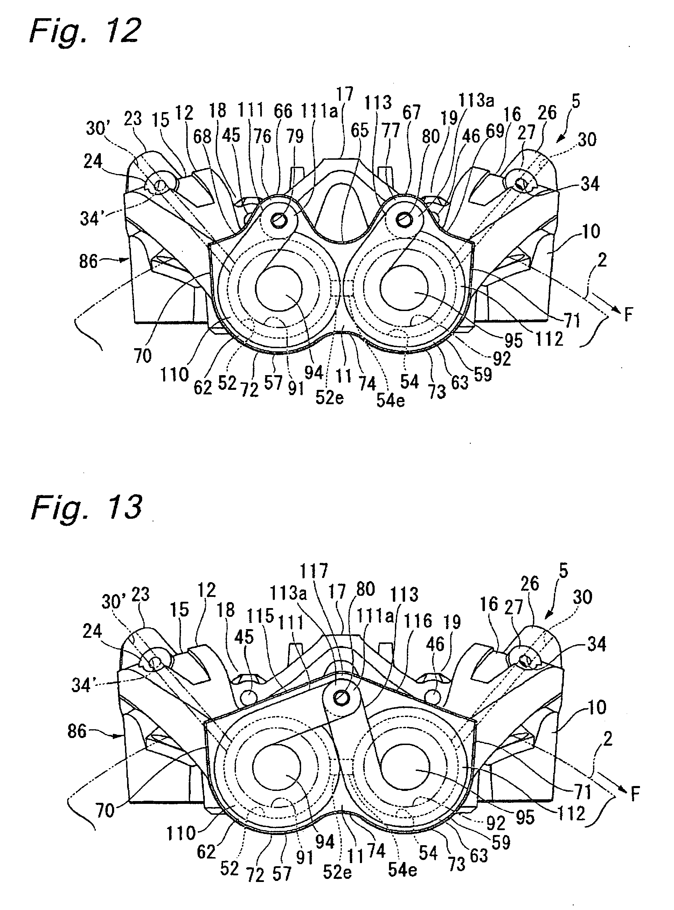

Since Figs. 1 to 5 illustrate the disk brake 1 which is installed on the left side of the vehicle, the bridge communication portions 30 and 34 are formed through the passage protrusions 26 and 27 at the left side as viewed in Fig. 1 that becomes upper side of the caliper body 5 when the disk brake 1 is installed on the vehicle. However, the same material is used for the caliper body 5, regardless of whether the disk brake 1 is installed on the left side or the right side of the vehicle, as will be described later. Therefore, for the disk brake which is installed on the right side of the vehicle, bridge portion communication passages 30' and 34' as indicated by the long dashed double-short dashed lines in Fig. 12 are formed at the passage protrusions 23 and 24 on the right side as viewed in Figs. 1 and 2 and on the left side as viewed in Fig. 4 which becomes upper side of the caliper body 5 when the disk brake 1 is installed on the vehicle. Instead, the above-mentioned bridge portion communication passages 30 and 34 are not formed in this case.

As shown in Fig. 1, the cylinder portion 10 includes mount holes 40 and 41 formed so as to penetrate therethrough along the disk radial direction at the disk rotation entrance side and the disk rotation exit side. The caliper 3 is a so-called radial-mount-type caliper which is fixedly attached to the vehicle body of the vehicle by not-shown attachment bolts which are inserted through the mount holes 40 and 41 extending along the disk radial direction.

Further, an inflow passage 42 is formed in a penetrating manner in parallel with the mount holes 40 41 at the central position of the disk rotational direction of the cylinder portion 10. The inflow passage 42 is formed so as to have a bottomed shape within a predetermined range of the outer side of the disk radial direction for establishing communication between cylinders 56 and 58 of the cylinder portion 10 which will be described later. A not-shown brake hose is connected to the opening of the inflow passage 42 for enabling supply and discharge of brake fluid.

As shown in Fig. 1, a plurality of pad pins, in particular, two pad pins 45 and 46 are disposed at the caliper body 5 so as to bridge a gap between the cylinder portions 10 and 11 along the disk axial direction. The pad pins 45 and 46 are in a relation spaced-apart in the disk rotational direction. One of the pad pins, the pad pin 45 is disposed in the opening 18 at the rotation entrance side of the caliper body 5. The other of the pad pins, the pad pin 46 is disposed in the opening 19 at the disk rotation exit side. As shown in Fig. 2, the pad pins 45 and 46 are disposed so as to have the same distance from the center of the disk 2, and extend at the outer circumferential side of the disk 2.

As shown in Fig. 3, bores 51 and 52 are formed at the disk rotation entrance side of the cylinder portions 10 and 11 of the caliper body 5. The bores 51 and 52 are open to the disk 2 side. The bores 51 and 52 are disposed so as to face each other in the disk axial direction, making a pair. Further, bores 53 and 54 are formed at the disk rotation exit side of the cylinder portions 10 and 11. The bores 53 and 54 are open to the disk 2 side. The bores 51 and 52 are disposed so as to face each other in the disk axial direction, making a pair. That is, the pair of bores 51 and 52, and the pair of bores 53 and 54, i.e., two pairs (multiple pairs) of bores in total are formed in a relation spaced-apart in the disk rotational direction. The pair of bores 51 and 52 at the disk rotation entrance side is formed in the opening 18 at the disk rotation entrance side of the caliper body 5 shown in Fig. 1. The pair of bores 53 and 54 at the disk rotation exit side shown in Fig. 3 is formed in the opening 19 at the disk rotation exit side of the caliper body 5 shown in Fig. 1. The bores 51 to 54 have a substantially same shape, and the above-mentioned similarly shaped pistons 6 to 9 are slidably fittedly inserted in the bores 51 to 54, respectively.

In this way, as shown in Fig. 3, a plurality of pairs of bores facing each other in the disk axial direction, in particular, two pairs of such bores are formed in series in the disk rotational direction. Accordingly, a plurality of pairs of pistons facing each other in the disk axial direction, in particular, two pairs of such pistons are disposed in series in the disk rotational direction.

The portion of the cylinder portion 10 where the bore 51 of the disk rotation entrance side is formed defines the cylinder 56 of the rotation entrance side and the disk outer side where the piston 6 is inserted. The portion of the cylinder portion 11 where the bore 52 of the disk rotation entrance side is formed defines the cylinder 57 of the rotation entrance side and the disk inner side where the piston 7 is inserted. The portion of the cylinder portion 10 where the bore 53 of the disk rotation exit side is formed defines the cylinder 58 of the rotation exit side and the disk outer side where the piston 8 is inserted. The portion of the cylinder portion 11 where the bore 54 of the disk rotation exit side is formed defines the cylinder 59 of the rotation exit side and the disk inner side where the piston 9 is inserted.

As a result, the caliper body 5 includes the plurality of cylinders 56 and 58 arranged in the disk rotational direction at one face side of the disk 2, thereby forming the cylinder portion 10 which is one of the cylinder portions. Further, the caliper body 5 includes the other plurality of cylinders 57 and 59 arranged in the disk rotational direction at the other face side of the disk 2, thereby forming the cylinder portion 11 which is the other of the cylinder portions. The opposed-type caliper body is constituted by connecting the cylinder portions 10 and 11 through the bridge portion 12. In other words, the cylinder portion 10, which is one of the cylinder portions, includes the pair of cylinders 56 and 58 arranged in the disk rotational direction at the one face side of the disk 2. The cylinder portion 11, which is the other of the cylinder portions, includes the pair of cylinders 57 and 59 arranged in the disk rotational direction at the other face side of the disk 2.

The outer circumferential edge of the opposite end of the cylinder portion 11 from the cylinder portion 10 where bottoms 62 and 63 are situated is defined by circular arc portions 65, 66, 67, 68, 69, 72, 73 and 74, and linear portions 70 and 71. The circular arc portion 65 is positioned at the center of the disk rotational direction and the outer side of the disk radial direction, and is concaved to the inner side of the disk radial direction. The circular arc portions 66 and 67 are positioned at the respective sides of the circular arc portion 65 in the disk rotational direction, and each are convexed to the outer side of the disk radial direction. The circular arc portions 68 and 69 are positioned at the respective sides of the circular arc portions 66 and 67 in the disk rotational direction, and each are slightly concaved to the inner side of the disk radial direction. The linear portions 70 and 71 extend from the respective opposite sides of the circular arc portions 68 and 69 from the circular arc portions 66 and 67 to the inner side of the disk radial direction. The circular arc portions 72 and 73 are formed at near sides to each other relative to the respective opposite sides of the linear portions 70 and 71 from the circular arc portions 68 and 69, and each are convexed to the inner side of the disk radial direction. The circular arc portion 74 is concaved to the outer side of the disk radial direction so as to connect the circular arc portions 72 and 73.

A protrusion 76 protruding to the outer side of the disk radial direction is formed inside the above-mentioned circular arc portion 66 at the bottom 62 of the cylinder 57. A protrusion 77 protruding to the outer side of the disk radial direction is also formed inside the above-mentioned circular arc portion 67 at the bottom 63 of the cylinder 59. Further, remaining holes 79 and 80 are residually formed at the protrusions 76 and 77 by friction stir welding (FSW) which will be described later.

The protrusion 76 and the remaining hole 79 formed at the protrusion 76 are disposed on a line passing through the center of the bore 52 which corresponds to the protrusion 76 and the remaining hole 79, and extending in parallel with the mount holes 40 and 41 shown in Figs. 1 and 3. The protrusion 77 and the remaining hole 80 formed at the protrusion 77 are disposed on a line passing through the center of the bore 54 which corresponds to the protrusion 77 and the remaining hole 80, and extending in parallel with the mount holes 40 and 41 shown in Figs. 1 and 3. In other words, a line L1 connecting the top of the protrusion 76 and the center of the bore 52 which corresponds to the protrusion 76, and a line L2 connecting the top of the protrusion 77 and the center of the bore 54 which corresponds to the protrusion 77 are in parallel with and have the same distance from a line O connecting the central position in the disk rotational direction of the caliper 3 and the center of the disk 2. The protrusions 76 and 77 protrude in parallel with each other. The remaining hole 79 is situated at the central position of the circular arc portion 66 defining the protrusion 76, and the remaining hole 80 is situated at the central position of the circular arc portion 67 defining the protrusion 77.

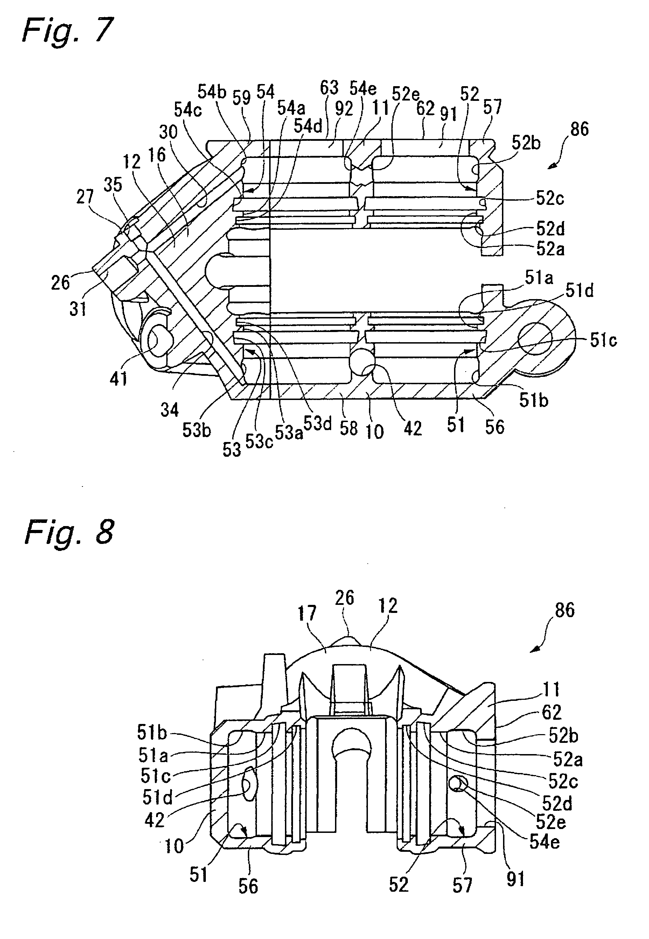

As shown in Fig. 7 which is a cross-sectional view taken along the line A-A shown in Fig. 6, the bores 51 to 54 are formed in an integrally formed caliper body main part 86 which mainly constitutes the caliper body 5. The bores 51 to 54 include similarly-shaped fitting inner-diameter portions 51a to 54a in which the pistons 6 to 9 shown in Fig. 3 are slidably fitted, and large-diameter inner-diameter portions 51b to 54b which are positioned at the bottom side relative to the fitting inner-diameter portions 51a to 54a, and have larger diameters than the diameters of the fitting inner-diameter portions 51a to 54a. Similarly-shaped seal circumferential grooves 51c to 54c, and seal circumferential grooves 51d to 54d are formed at the substantially middle positions in the axial direction of the fitting inner-diameter portions 51a to 54a. The seal circumferential grooves 51c to 54c and seal circumferential grooves 51d to 54d have larger diameters than the diameters of the fitting inner-diameter portions 51a to 54a, and hold not-shown piston seals therein. The pistons 6 to 9 slide inside the fitting inner-diameter portions 51a to 54a and the not-shown piston seals. The fitting inner-diameter portions 51a to 54a, the large diameter inner-diameter portions 51b to 54b, the seal circumferential grooves 51c to 54c, and the seal circumferential grooves 51d to 54d are formed by cutting the caliper body main part 86 after the caliper body main part 86 is cast. The larger diameter inner-diameter portions 51b to 54b may be formed by casting, i.e., may have a casting surface.

As shown in Fig. 1, a pair of brake pads 81 and 82 of the disk rotation entrance side is disposed at the opening 18 at the disk rotation entrance side of the caliper body 5. The pair of brake pads 81 and 82 is supported by the pad pin 45 of the disk rotation entrance side so as to be movable in the disk axial direction. Similarly, a pair of brake pads 83 and 84 of the disk rotation exit side is disposed at the opening 19 at the disk rotation exit side of the caliper body 5. The pair of brake pads 83 and 84 of the disk rotation exit side is supported by the pad pin 46 of the disk rotation exit side so as to be movable in the disk axial direction. In this way, the caliper 3 includes multiple pairs of brake pads, in particular, two pairs of brake pads 81 to 84 supported so as to be movable in the disk axial direction.

As shown in Fig. 3, the pair of brake pads 81 and 82 of the disk rotation entrance side is disposed on the respective faces of the disk 2 in the axial direction. Similarly, the pair of brake pads 83 and 84 of the disk rotation exit side is disposed on the respective faces of the disk 2 in the axial direction. The pair of brake pads 81 and 82 of the disk rotation entrance side is respectively pushed and pressed against the disk 2 by the pair of pistons 6 and 7 of the disk rotation entrance side which are disposed at the caliper body 5 opposite of the brake pads 81 and 82 from the disk 2. Similarly, the pair of brake pads 83 and 84 of the disk rotation exit side is respectively pushed and pressed against the disk 2 by the pair of pistons 8 and 9 of the disk rotation exit side which are disposed at the caliper body 5 opposite of the brake pads 83 and 84 from the disk 2. Due to this arrangement, the disk brake 1 can generate a brake force applied to the vehicle. As shown in Fig. 1, a pad spring 85 is disposed at the outer side of the disk radial direction of the brake pads 81 to 84 for urging the brake pads 81 to 84 toward the inner side of the disk radial direction and the disk rotation exit side.

The caliper body 5 includes passages for introducing brake fluid into the bores 51 to 54 for actuating the pistons 6 to 9. More specifically, as shown in Figs. 7 and 8, the above-mentioned inflow passage 42 for supply/discharge of brake fluid from/to the outside is penetratingly formed at the cylinder portion 10 at the position between the bores 51 and 53 on the respective sides of the inflow passage 42 in such a manner that the inflow passage 42 is in communication with the large-diameter inner-diameter portions 51b and 53b of the bores 51 and 53. The bores 51 and 53 at the respective sides of the inflow passage 42 are in communication with each other through the inflow passage 42. Between-cylinder communication passages 52e and 54e are penetratingly formed at the cylinder portion 11 at the disk rotation entrance side and the disk rotation exit side thereof in such a manner that they intersect at an intermediate position between the bores 52 and 54 at the respective sides of the passages 52e and 54e, whereby the between-cylinder communication passages 52e and 54e serve as communication passages establishing communication between the large-diameter inner diameter portions 52b and 54b of the bores 52 and 54 at the respective sides of the passages 52e and 54e. In other words, the between-cylinder communication passages 52e and 54e establish communication between the cylinders 57 and 59 arranged in the disk rotational direction at one face side of the disk 2.

The caliper body 5 includes the above-mentioned bridge portion communication passages 30 and 34 penetratingly formed from the outside at the disk rotation exit side for establishing communication between the large-diameter inner-diameter portions 53b and 54b of the opposing bores 53 and 54 at the rotation exit side, in such a manner that they intersect in the caliper body 5. That is, the bridge portion communication passage 30 is penetratingly formed from the passage protrusion 26 to the larger-diameter inner-diameter portion 54b through the bridge portion 12 and the cylinder portion 11. The bridge portion communication passage 34 is penetratingly formed from the passage protrusion 27 to the larger-diameter inner-diameter portion 53b through the bridge portion 12 and the cylinder portion 10 in such a manner that the passage 24 intersect with the bridge portion communication passage 30 at an intermediate position. Due to this arrangement, the bridge portion communication passages 30 and 34 are formed at the bridge portion 12, and establish communication between the cylinders 58 and 59 of the cylinders 56 to 59 disposed at the respective sides of the disk 2 which are at the same disk rotation side.

In the above-mentioned caliper body main part 86 mainly constituting the caliper body 5, as shown in Figs. 7 and 8, the above-mentioned cylinder portions 10 and 11 and the bridge portion 12 are formed by, for example, processing an integrally formed material made from an aluminum alloy cast, except for a part of the bottoms 62 and 63 of the cylinders 57 and 59 of the cylinder portion 11 which is one of the cylinder portions 10 and 11.

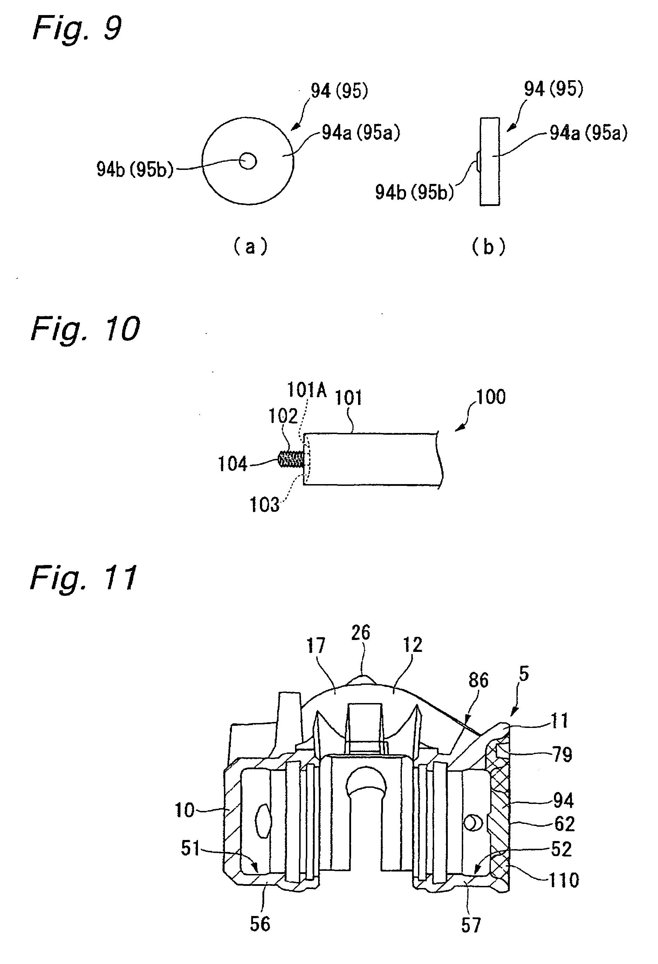

The caliper body main part 86 is prepared by processing an integrally formed material into a shape having an opening 91 at the bottom 62 of the bore 52 of the cylinder 57, and an opening 92 having the same shape as the opening 91 at the bottom 63 of the bore 54 of the cylinder 59. The caliper body 5 is constituted by the caliper body main part 86, and similarly-shaped two cover members 94 and 95 shown in Figs. 9(a) and (b) closing the openings 91 and 92 of the caliper body main part 86.

The caliper body main part 86 shown in Figs. 7 and 8 is formed from a material at which the disk rotation entrance side and the disk rotation exit side are cast symmetrically about the center of the disk rotational direction so that the caliper body main part 86 can be commonly used for a disk brake installed on the left side of a vehicle and a disk brake installed on the right side of a vehicle. This material is, regardless of whether a later-completed disk brake is installed on the left side or the right side, provided with the mount holes 40 and 41 and the inflow passage 42 shown in Fig. 1, and the openings 91 and 92, the fitting inner-diameter portions 51a to 54a, the large-diameter inner-diameter portions 51b to 54b, the seal circumferential grooves 51c to 54c, the seal circumferential grooves 51d to 54d, and the between-cylinder communication passages 52e and 54e shown in Fig. 7. Then, only the bridge portion, which will become the upper side when the disk brake is installed on a vehicle, is provided by drilling or another method with the bridge portion communication passages 30 and 34 indicated by dotted lines in Fig. 12 or the bridge portion communication passages 30' and 34' indicated by the long dashed double-short dashed line shown in Fig. 12, according to which side the disk brake is installed on, the left side or the right side. Pilot holes are formed for the openings 91 and 92 and the fitting inner-diameter portions 51a to 54a when the caliper body main part 86 is still in a material state, and these portions are completed by a cutting process along the pilot holes.

The cover members 94 and 95 shown in Fig. 9 are, for example, formed from aluminum alloy so as to have a disk shape. The cover members 94 and 95 are fitted to the openings 91 and 92 of the caliper body main part 86 shown in Figs. 7 and 8, whereby they are formed to have an outer diameter slightly smaller than the openings 91 and 92. The cover members 94 and 95 have the same shape; as shown in Fig. 9, the cover members 94 and 95 include disk portions 94a and 95b having a certain thickness, and protrusions 94b and 95b protruding from the centers of the disk portions 94a and 95b in a one axial side so as to have a certain height. (In Fig. 9, the reference numerals relating the cover member 94 are used, and the reference numerals relating the cover member 95 are shown in parentheses following them.)

The openings 91 and 92 of the caliper body main part 86 shown in Fig. 7 have straight cylindrical shapes having the same diameter without a step on the inner circumferential surfaces thereof. Therefore, the cover members 94 and 95 shown in Fig. 9 also have cylindrical shapes having straight outer circumferential surfaces.

As shown in Fig. 7, the opening 91 of the caliper body main part 86 is formed into a circular shape coaxial with the bore 52 at the bottom 62 of the cylinder 57. The inner diameter of the opening 91 is smaller than the inner diameter of the fitting inner-diameter portion 52a of the bore 52. The opening 92 of the caliper body main part 86 is formed into a circular shape coaxial with the bore 54 at the bottom 63 of the cylinder 59. The inner diameter of the opening 92 is smaller than the inner diameter of the fitting inner-diameter portion 54a of the bore 54.

The openings 91 and 92 of the caliper body main part 86 are used as processing holes through which processing of the inner circumferential surfaces of the bores 51 to 54 are performed after the casting of the caliper body main part 86. For example, the opening 91, after having been completed as the opening 91 or while still being a pilot hole of the opening 91 immediately after the casting, is used as a hole through which a cutting tool is inserted at the time of the forming the fitting inner-diameter portions 51a and 52a, the large-diameter inner-diameter portions 51b and 52b, the seal circumferential grooves 51c and 52c, and the seal circumferential grooves 51d and 52d on the inner circumferential surfaces of the bores 51 and 52 of the cylinder portions 10 and 11 as well as the between-cylinder communication passage 52e. Similarly, the opening 92, after having been completed as the opening 92 or while still being a pilot hole of the opening 92 immediately after the casting, is used as a hole through which a cutting tool is inserted at the time of the forming the fitting inner-diameter portions 53a and 54a, the larger-diameter inner-diameter portions 53b and 54b, the seal circumferential grooves 53c and 54c, and the seal circumferential grooves 53d and 54d on the inner circumferential surfaces of the bores 53 and 54 of the cylinder portions 10 and 11 as well as the between-cylinder communication passage 53e.

After the caliper body main part 86 is cast, the above-mentioned cutting process of the inner circumferential surfaces of the bores 51 to 54, the cutting process of the openings 91 and 92, the process of penetratingly forming the inflow passage 42 and the between-cylinder passages 52e and 54e, and the process of penetratingly forming the bridge portion communication passages 30 and 34 or 30' and 34' are performed. After that, the openings 91 and 92 are closed by welding the cover members 94 and 95 to the openings 91 and 92 of the cylinders 57 and 59 by friction stir welding, as will be mentioned below.

A welding tool 100 used in this friction stir welding, as shown in Fig. 10, includes a cylindrical large-diameter shaft portion 101, and a cylindrical tip shaft portion 102 which has a smaller diameter than the diameter of the large-diameter portion 101 and is coaxial with the large-diameter portion 101. A concaved portion 103 having a circular arc shape in cross section in the axial direction of the welding tool is formed at a shoulder 101A at the tip side of the large-diameter shaft portion 101, and the tip shaft portion 102 is erected from the center of the concaved portion 103. Further, the tip shaft portion 102 includes a threaded portion formed at the outer circumference thereof, and a spherically formed tip 104. The details of the method of friction stir welding with use of this welding tool 100 is, for example, disclosed in Figs. 12A to 12C of US Patent No. 5460317.

When the cover members 94 and 95 are attached to the caliper body main part 86, the cover members 94 and 95 are respectively fitted into the openings 91 and 92 with the protrusions 94b and 95b positioned inside, so that the cover members 94 and 95 are supported from the bores 52 and 54 side.

Then, from this state, as shown in Fig. 12, for example, friction stir welding is applied to the connection boundary between the opening 91 of the cylinder 57 and the cover member 94. For this friction stir welding, the tip shaft portion 102 of the rapidly rotating welding tool 100 is continuously moved along the connection boundary between the opening 91 and the cover member 94 in a predetermined direction (the clockwise direction as viewed in Fig. 12), stating from the opposite side of the opening 91 from the opening 92, thereby circularly performing friction stir welding throughout the whole circumference of the cover member 94, so that the cover member 94 can be integrally welded to the caliper body main portion 86 at the boundary therebetween. Then, a loop-like welding track 110 of the friction stir welding is formed along the boundary between the cover member 94 and the caliper body main part 86.

Then, after the welding tool 100 is returned to the welding start point at the outer circumference of the cover member 94, the welding tool 100 is linearly moved along the tangent line of the welding track 110 between the cover member 94 and the caliper body main part 86, and is released to the protrusion 76 protruding to the outer side of the disk radial direction relative to the bottom 62 of the cylinder 57. After that, the welding tool 100 is pulled out from the caliper body 5.

This process results in formation of a movement track 111 of the friction stir welding of the welding tool 100 which is continuous from the welding track 110, and linearly extends to the protrusion 76 at the outer side relative to the welding track 110. Further, the tip shaft portion 102 of the welding tool 100 forms the remaining hole 79 at a position of the protrusion 76 from which the welding tool 100 is pulled out. The remaining hole 79 is formed at the outer side of the outer diameter direction of the loop-like welding track 110. The remaining hole 79 does not overlap the loop-like welding track 110.

Further, friction stir welding is applied to the connection boundary between the opening 92 of the cylinder 59 and the cover member 95 by moving the welding tool 100 so as to form the same track as the welding track 110 and the movement track 111 of the welding tool 100 when the cover member 94 is welded to the opening 91. That is, the tip shaft portion 102 of the rapidly rotating welding tool 100 is continuously moved along the connection boundary between the opening 92 and the cover member 95 in a predetermined direction (the clockwise direction as viewed in Fig. 12), stating from the position of the opening 92 nearest to the opening 91, thereby circularly performing friction stir welding throughout the whole circumference of the cover member 95, so that the cover member 95 can be integrally welded to the caliper body main part 86 at the boundary therebetween. Then, a loop-like welding track 112 of the friction stir welding is formed along the boundary between the cover member 95 and the caliper body main part 86.

Then, after the welding tool 100 is returned to the welding start point at the outer circumference of the cover member 95, the welding tool 100 is linearly moved along the tangent line of the welding track 112 between the cover member 95 and the caliper body main part 86, and is released to the protrusion 77 protruding to the outer side of the disk radial direction relative to the bottom 63 of the cylinder 59. After that, the welding tool 100 is pulled out from the caliper body 5.

This process results in formation of a movement track 113 of the friction stir welding of the welding tool 100 which is continuous from the welding track 112, and linearly extends to the protrusion 77 at the outer side relative to the welding track 112. Further, the tip shaft portion 102 of the welding tool 100 forms the remaining hole 80 at a position of the protrusion 77 from which the welding tool 100 is pulled out. The remaining hole 80 is formed at the outer side of the outer diameter direction of the loop-like welding track 112. The remaining hole 80 does not overlap the loop-like welding track 112.

The above-mentioned welding of the cover member 95 to the opening 92 may be performed first, and the above-mentioned welding of the cover member 94 to the opening 91 may be preformed after that. Alternatively, the above-mentioned two welding may be performed concurrently.

In this way, the welding track 110, the movement track 111, and the remaining hole 79 at the cylinder 57 at the disk rotation entrance side, and the welding track 112, the movement track 113, and the remaining hole 80 at the cylinder 59 at the disk rotation exit side are formed so as to have the same phases and the same shapes.

It should be noted that the protrusion 76 is formed at a position out of alignment in the circumferential direction of the cylinder 57 with the positions where the positions of the between-cylinder communication passages 52e and 54e in communication with the cylinder 57 are formed. As a result, a finish position 111a of the friction stir welding is situated at the outer circumferential side of the cylinder 57 offset from the loop-like welding track 110 of the friction stir welding, at a position out of alignment in the circumferential direction of the cylinder 57 with the positions where the between-cylinder communication passages 52e and 54e in communication with the cylinder 57 are formed. In this case, the finish position 111a of the friction stir welding is a position where the welding tool for the friction stir welding is pulled out from the caliper body 5, and a portion where the material of the caliper body 5 is stirred by the welding tool 100. In particular, referring to Fig. 12, the finish position 111a is a circular portion indicated by the solid line and the dotted line outside the remaining hole 79. Therefore, the finish position 111a is separated from the between-cylinder communication passages 52e and 54e by at least a distance equal to or more than the length of the radius of the shoulder 101A of the large-diameter shaft portion 101 of the welding tool 100 from the center of the remaining hole 79, so that the finish position 111a is not aligned with the between-cylinder communication passages 52e and 54e in the circumferential direction. That is, an area to be stirred by the friction stir welding is determined by the diameter of the shoulder 101A, and usually has a size smaller than the diameter of the shoulder 101A. Therefore, positioning the finish position 111a at a position separated from the between-cylinder communication passages 52e and 54e by a distance equal to or more than the length of the radius of the shoulder 101A from the center of the remaining hole 79 can prevent the reduction in the sizes of the between-cylinder communication passages 52e and 54e which would otherwise be caused by the above-mentioned stirring at the finish position 111a.

Similarly, the protrusion 77 is formed at a position out of alignment in the circumferential direction of the cylinder 59 with the positions where the bridge portion communication passage 30 and the between-cylinder communication passages 52e and 54e in communication with the cylinder 59 are formed. As a result, a finish position 113a of the friction stir welding is disposed at the outer circumferential side of the cylinder 57 offset from the loop-like welding track 112 of the friction stir welding, at a position out of alignment in the circumferential direction of the cylinder 59 with the positions where the bridge portion communication passage 30 and the between-cylinder communication passages 52e and 54e in communication with the cylinder 59 are formed. In this case, similarly to the above-mentioned finish position 111a, the finish position 113a is separated from the bridge portion communication passage 30 and the between-cylinder communication passages 52e and 54e by at least a distance equal to or more than the length of the radius of the shoulder 101A of the large-diameter shaft portion 101 of the welding tool 100 from the center of the remaining hole 80, so that the finish position 113a can be out of alignment in the circumferential direction with the bridge portion communication passage 30 and the between-cylinder communication passages 52e and 54e.

The above-mentioned method is directed to the caliper body 5 which will be installed on the left side of a vehicle. For the caliper body 5 which will be installed on the right side of a vehicle, as indicated by the long dashed double-short dashed line in Fig. 12, the bridge portion communication passages 30' and 34' are formed at the passage protrusions 23 and 24. In this case, the protrusion 76 is formed at a position out of alignment in the circumferential direction of the cylinder 57 with the positions where the bridge portion communication passage 30' and the between-cylinder communication passages 52e and 54e in communication with the cylinder 57 are formed. As a result, the finish position 111a of the friction stir welding is disposed at the outer circumferential side of the cylinder 57 offset from the loop-like welding track 110 of the friction stir welding, at a position out of alignment in the circumferential direction of the cylinder 57 with the positions where the bridge portion communication passage 30' and the between-cylinder communication passages 52e and 54e in communication with the cylinder 57 are formed. Similarly in this case, the finish position 111a of the friction stir welding is separated from the bridge portion communication passage 30' and the between-cylinder communication passages 52e and 54e by at least a distance more than the length of the radius of the shoulder 101A of the large-diameter shaft portion 101 of the welding tool 100 from the center of the remaining hole 79, so that the finish position 111a is out of alignment in the circumferential direction with the bridge portion communication passage 30' and the between-cylinder communication passages 52e and 54e.

For the caliper body 5 which will be installed on the right side of a vehicle, the protrusion 77 is formed at a position out of alignment in the circumferential direction of the cylinder 59 with the positions where the between-cylinder communication passages 52e and 54e in communication with the cylinder 59 are formed. As a result, the finish position 113a of the friction stir welding is disposed at the outer circumferential side of the cylinder 59 offset from the loop-like welding track 112 of the friction stir welding, at a position out of alignment in the circumferential direction of the cylinder 59 with the positions where the between-cylinder communication passages 52e and 54e in communication with the cylinder 59 are formed. Similarly in this case, the finish position 113a of the friction stir welding is separated from the between-cylinder communication passages 52e and 54e by at least a distance equal to or more than the length of the radius of the shoulder 101A of the large-diameter shaft portion 101 of the welding tool 100 from the center of the remaining hole 80, so that the finish position 113a is out of alignment in the circumferential direction with the between-cylinder communication passages 52e and 54e.

There is no difference between manufacturing of the caliper body 5 which will be installed on the right side of a vehicle, and manufacturing of the caliper body 5 which will be installed on the left side of a vehicle, in terms of the movement of the welding tool 100, the welding tracks 110 and 112, and the movement tracks 111 and 113. In this way, the caliper body 5 can be processed by a friction stir welding apparatus having the same settings for manufacturing regardless of whether the caliper body 5 is installed on the left side or the right side of a vehicle, and thereby a tooling change in the apparatus is not necessary for manufacturing both the caliper bodies 5 for the left side and the right side. As a result, it is possible to improve the efficiency of disk brake manufacturing.

In the disk brake disclosed in the above-mentioned Japanese Patent Public Disclosure No. 2007-10136, the finish position of the friction stir welding is close to the brake fluid flow communication passage formed in the caliper body, and therefore there is a possibility of preventing a brake fluid flow through the passage.

On the other hand, according to the disk brake 1 manufactured according to the first embodiment, the finish position 111a of the friction stir welding at the cylinder 57 at the disk rotation entrance side is disposed at the outer circumferential side of the cylinder 57 offset from the loop-like welding track 110 of the friction stir welding, at a position out of alignment in the circumferential direction of the cylinder 57 with the positions where the communication passages 52e and 54e in communication with the cylinder 57 are formed. Further, the finish position 113a of the friction stir welding at the cylinder 59 at the disk rotation exit side is disposed at the outer circumferential side of the cylinder 59 offset from the welding track 112 of the friction stir welding, at a position out of alignment in the circumferential direction of the cylinder 59 with the positions where the bridge portion communication passage 30 or 30' and the communication passages 52e and 54e in communication with the cylinder 59 are formed. Due to this arrangement, optimization of the structure so as to prevent formation of a thin portion is realized. Further, at both of the cylinders 57 and 59 the finish positions 111a and 113a of the friction stir welding are disposed apart from the bridge portion communication passage 30 or 30' and the between-cylinder communication passage 52e and 54e. As a result, it is possible to prevent a blockage of a brake fluid flow through the communication passages (bridge portion) which would otherwise be caused by a bulge generated by the friction stir welding, and it is possible to improve the pressure capacity of the caliper 3. That is, it is possible to provide a disk brake capable of reducing a problem with the performance regarding fluid pressure.

In the present embodiment, the caliper body main part 86 of the caliper body 5 is formed from a material configured such that the disk rotation entrance side and the disk rotation exit side become symmetrical about the center of the disk rotational direction so that the caliper body 5 can be used as both of the disk brake to be installed on the left side and the disk brake to be installed on the right side of a vehicle. There is a possibility that the caliper body 5 may be installed on the left side of a vehicle so that the bridge portion communication passage 30 and 34 may be formed at the passage protrusions 26 and 27, and there is another possibility that the caliper body 5 may be installed on the right side of a vehicle so that the bridge portion communication passage 30' and 34' may be formed at the passage protrusions 23 and 24. In consideration of these possibilities, the finish positions of the friction stir welding are arranged so that the above-mentioned relationship can be satisfied in either case that the bridge portion communication passages 30 and 34 are formed at the passage protrusions 26 and 27 for the left-side disk brake as indicated by the dotted line and the solid line in Fig. 12, or that the bridge portion communication passages 30' and 34' are formed at the passage protrusions 23 and 24 for the right-side disk brake as indicated by the long dashed double-short dashed line shown in Fig. 12. Therefore, even though a common material is used for both of the left-side disk brake and the right-side disk brake, it is possible to prevent brake fluid flow from being blocked due to a bulge generated by the friction stir welding, and improve the pressure capacity of the caliper 3. That is, it is possible to provide a disk brake capable of reducing a problem with the performance regarding fluid pressure.

In the present embodiment, the caliper body 5 is an opposed-type caliper body comprising one cylinder portion 10 including a plurality of cylinders, i.e., the cylinders 56 and 58 arranged in the disk rotational direction at the one face side of the disk 2, the other cylinder portion 11 including another plurality of cylinders, i.e., the cylinders 57 and 59 arranged in the disk rotational direction at the other face side of the disk 2, and the bridge portion 112 connecting the cylinder portions 10 and 11 with each other. The caliper body 5 comprises the bridge portion communication passages 30 and 34 formed at the bridge portion 12 and connecting at least the cylinders 58 and 59 of the cylinders 56 to 59 disposed at the respective faces of the disk 2, and the between-cylinder communication passages 52e and 54e connection the cylinders 57 and 59 arranged in the disk rotation direction at one face side of the disk 2. The finish positions 111a and 113a of the friction stir welding are separated from the bridge portion communication passage 30 and the between-cylinder communication passages 52e and 54e so that optimization of the structure so as to prevent formation of a thin portion is realized. Therefore, it is possible to improve the pressure capacity of the four-pot opposed-type caliper 3. That is, it is possible to provide a disk brake capable of reducing a problem with the performance regarding fluid pressure.

In the present embodiment, at the cylinder 57, in order that the finish position 111a of the friction stir welding is out of alignment in the circumferential direction of the cylinder 57 with the between-cylinder communication passages 52e and 54e in communication with the cylinder 57, the finish position 111a of the friction stir welding is separated from the between-cylinder communication passages 52e and 54e. The separation distance is at least a distance equal to or more than the length of the radius of the shoulder 101A of the large-diameter shaft portion 101 of the welding tool 100 from the center of the remaining hole 79. Therefore, it is possible to securely prevent the between-cylinder communication passages 52e and 54e from being closed and deformed due to a bulge generated by the friction stir welding to the between-cylinder communication passages 52e and 54e at the time of the friction stir welding at the bottom 62 of the cylinder 57. Similarly, at the cylinder 59, in order that the finish position 113a of the friction stir welding is out of alignment in the circumferential direction of the cylinder 59 with the bridge portion communication passage 30 and the between-cylinder communication passages 52e and 54e in communication with the cylinder 59, the finish position 113a of the friction stir welding is separated from the bridge portion communication passage 30 and the between-cylinder communication passages 52e and 54e. The separation distance is at least a distance equal to or more than the length of the radius of the shoulder 101A of the large-diameter shaft portion 101 of the welding tool 100 from the center of the remaining hole 80. Therefore, it is possible to securely prevent the bridge portion communication passage 30 and the between-cylinder communication passages 52e and 54e from being closed and deformed due to a bulge generated by the friction stir welding to the communication passages 30, 52e and 54e at the time of the friction stir welding at the bottom 63 of the cylinder 59. Therefore, it is possible to ensure a supply of a brake fluid pressure to the cylinders 57 and 59. Therefore, it is possible to ensure a supply of a brake fluid pressure to the cylinders 57 and 59. That is, it is possible to provide a disk brake capable of reducing a problem with the performance regarding fluid pressure.

In the present embodiment, there is no difference between manufacturing of the caliper body 5 which will be installed on the right side of a vehicle, and manufacturing of the caliper body 5 which will be installed on the left side of a vehicle, in terms of the material, the movement of the welding tool 100, the welding tracks 110 and 112, and the movement tracks 111 and 113. In this way, the caliper body 5 can be processed by a friction stir welding apparatus having the same settings regardless of whether the caliper body 5 is installed on the left side or the right side of a vehicle, and thereby a tooling change in the apparatus is not necessary for manufacturing both the caliper bodies 5 for the left side and the right side. As a result, it is possible to improve the efficiency of disk brake manufacturing.

In the present embodiment, since the cylinders 57 and 59 have the openings 91 and 92 shaped and configured in the same manner, the cover members 94 and 95 shaped and configured in the same manner, and the protrusions 76 and 77 protruding in parallel with each other, it is possible to move the single tool welding 100 along the same track for both the cylinders, when friction stir welding is sequentially applied to the plurality of cylinders, i.e., the cylinders 57 and 59 with use of the single welding tool 100. Therefore, it is unnecessary to change the movement program of the welding tool 100 for the plurality of cylinders 57 and 59 in a friction stir welding apparatus, thereby enabling simplification of the program. Further, even when friction stir welding is applied to the plurality of cylinders 57 and 59 concurrently with use of a plurality of welding tools 100, it is possible to move the plurality of welding tools 100 along the same track, thereby enabling simplification of the movement program of the welding tool 100. That is, it is possible to improve the efficiency of disk brake manufacturing.

In the present embodiment, the welding track 110, the movement track 111 and the remaining hole 79 at the cylinder 57 at one side of the disk rotational direction, and the welding track 112, the movement track 113 and the remaining hole 80 at the cylinder 59 at the other side of the disk rotational direction have the same phases and the same shapes. Therefore, it is possible to improve the design performance.

The present embodiment employs a piston-opposed-type 4-pot caliper having two pairs of pistons. However, the present invention may be applied to a piston-opposed-type 6-pot caliper having three pairs of pistons, and a caliper having four or more pairs of pistons. In theses cases, similarly, it is possible to bring about the same advantageous effects as mentioned above, by positioning the finish positions of friction stir welding so as to be out of alignment in the circumferential direction of the cylinder with the position where the bridge communication passage of the bridge portion is formed, and the positions where the between-cylinder communication passages between the cylinders are formed.

### [Second Embodiment]

Next, a second embodiment of the present invention will be described with main reference to Fig. 13, focusing on differences from the first embodiment.

Fig. 13 is a back view illustrating friction stir welding performed at the caliper body of the disk brake manufactured according to the second embodiment of the present invention. Like elements are identified by the same names and reference numerals as those used in the first embodiment.

The disk brake manufactured according to the second embodiment is used for a two-wheeled vehicle, similarly to those manufactured according to the first embodiment.

The disk brake manufactured according to the second embodiment is formed by applying friction stir welding to the cylinder portion 11 of the caliper body 5 in a different manner from that in the first embodiment. In the second embodiment, the outer edge of the opposite end of the cylinder portion 11 from the cylinder portion 10 includes the outer side of the disk radial direction between the linear portions 70 and 71 which is constituted by linear portions 115 and 116 connected so as to form a curve convexed to the outer side of the disk radial direction at the center of the disk rotational direction.

Therefore, only one protrusion 117 protruding to the outer side of the disk radial direction is formed at the bottom of the cylinder 11 near the boundary between the above-mentioned linear portions 115 and 116 which corresponds to the center of the disk rotational direction. Only one remaining hole 80 is residually formed at a position of the protrusion 117 due to friction stir welding. The protrusion 117 and the remaining hole 80 are positioned on the line passing through the center of the disk rotational direction of the caliper body 5 along the disk radial direction.

In the second embodiment, similarly, the caliper body 5 is constituted by the caliper body main part 86 prepared by processing an integrally formed material into a shape having the openings 91 and 92 at the bottoms 62 and 63 of the bores 52 and 54, and the cover members 94 and 95 closing the openings 91 and 92 of the caliper body main part 86. The caliper body main part 86 is completed, for example, by penetratingly forming the bridge portion communication passages 30 and 34 only at the disk rotation exit side which will become the upper side when the disk brake is installed on a vehicle according to whether the disk brake is installed on the left side or the right side of a vehicle, of the material configured such that the disk rotation entrance side and the disk rotation exit side become symmetrical about the center of the disk rotational direction. Referring to Fig. 13, similarly to the first embodiment, the bridge portion communication passages 30 and 34 for the disk brake to be installed on the left side of a vehicle are indicated by the dotted line and the solid line, and the bridge portion communication passages 30' and 34' for the disk brake to be installed on the right side of a vehicle are indicated by the long dashed double-short dashed line.

Then, from the state that the cover members 94 and 95 are fitted into the openings 91 and 92 of the caliper body main part 86, for example, friction stir welding is applied to the connection boundary between the opening 91 of the cylinder 57 and the cover member 94.

For this friction stir welding, for example, the tip shaft portion 102 of the rapidly rotating welding tool 100 is continuously moved along the connection boundary between the opening 91 and the cover member 94 in a predetermined direction (the clockwise direction as viewed in Fig. 13), stating from the outer side of the disk radial direction of the opening 91, thereby circularly performing friction stir welding throughout the whole circumference of the cover member 94, so that the cover member 94 can be integrally welded to the caliper body main portion 86 at the boundary therebetween. Then, a loop-like welding track 110 of the friction stir welding is formed along the boundary between the cover member 94 and the caliper body main part 86.

Then, after the welding tool 100 is returned to the welding start point at the outer circumference of the cover member 94, the welding tool 100 is linearly moved in parallel with the linear portion 115 along the tangent line of the welding track 110 between the cover member 94 and the caliper body main part 86, and is released to the protrusion 117 protruding to the outer side of the disk radial direction relative to the bottom 62 of the cylinder 57. After the welding tool 100 is positioned to the center of the disk rotational direction of the caliper body 5, the welding tool 100 is pulled out from the caliper body 5.

This process results in formation of the movement track 111 of the friction stir welding of the welding tool which is continuous from the welding track 110, and linearly extends in parallel with the linear portion 115 to the protrusion 117 at the outer side relative to the welding track 110.

Next, the tip shaft portion 102 of the rapidly rotating welding tool 100 is continuously moved along the connection boundary between the opening 92 and the cover member 95 in a predetermined direction (the clockwise direction as viewed in Fig. 13), stating from the position of the opening 92 nearest to the opening 91, thereby circularly performing friction stir welding throughout the whole circumference of the cover member 95, so that the cover member 95 can be integrally welded to the caliper body main portion 86 at the boundary therebetween. Then, the loop-like welding track 112 of the friction stir welding is formed along the boundary between the cover member 95 and the caliper body main part 86.

Then, after the welding tool 100 is returned to the welding start point at the outer circumference of the cover member 95, the welding tool 100 is linearly moved along the tangent line of the welding track 112 between the cover member 95 and the caliper body main part 86 toward the finish position 111a of the movement track 111, and is released to the protrusion 117 protruding to the outer side of the disk radial direction relative to the bottom 76 of the cylinder 59. Then, the welding tool 100 is moved to the finish position 111a of the movement track 111. After the welding tool 100 is situated at the finish position 111a of the movement track 111, the welding tool 100 is pulled out from the caliper body 5.

This process results in formation of the movement track 113 of the friction stir welding of the welding tool 100 which is continuous from the welding track 112, and linearly extends to the protrusion 117 at the outer side relative to the welding track 112. Further, the finish positions 111a and 113a of the friction stir welding for the pair of cylinders 57 and 59 arranged at one side of the disk 2 in the disk rotational direction are positioned at a same position between the pair of cylinders 57 and 59, and are positioned at the center between the pair of cylinders 57 and 59 in the disk rotational direction, i.e., the center of the disk rotational direction of the caliper body 5. Further, the remaining hole 80 is formed at the protrusion 117 where the welding tool 100 is pulled out from by the tip shaft portion 102 of the welding tool 100. The remaining hole 80 is formed at the outer side of the outer diameter direction relative to the welding tracks 110 and 112. The remaining hole 80 does not overlap the welding tracks 110 and 112.

The above-mentioned welding of the cover member 95 to the opening 92 may be performed first, and the above-mentioned welding of the cover member 94 to the opening 91 may be performed after that. In this case, similarly, the welding tool 100 is moved such that the finish position 111a of the movement track 111 generated at the time of the welding of the cover member 94 to the opening 91 coincides with the finish position 113a of the movement track 113 generated at the time of the welding of the cover member 95 to the opening 92.

Similarly to the first embodiment, the protrusion 117 is formed at a position such that the protrusion 117 is out of alignment in the circumferential direction of the cylinder 57 with the positions where the between-cylinder communication passages 52e and 54e in communication with the cylinder 57 are formed if the caliper body 5 will be installed on the left side of a vehicle (positions where the bridge portion communication passage 30 and the between-cylinder communication passages 52e and 54e in communication with the cylinder 57 are formed if the caliper body 5 will be installed on the right side of a vehicle) . As a result, the finish positions 111a and 113a of the friction stir welding are disposed at the outer circumferential side of the cylinder 57 offset from the welding track 110 of the friction stir welding, at a position out of alignment in the circumferential direction of the cylinder 57 with the positions where the between-cylinder communication passages 52e and 54e in communication with the cylinder 57 are formed if the caliper body 5 will be installed on the left side of a vehicle (positions where the bridge portion communication passage 30 and the between-cylinder communication passages 52e and 54e in communication with the cylinder 57 are formed if the caliper body 5 will be installed on the right side of a vehicle). Similarly to the first embodiment, the finish positions 111a and 113a of the friction stir welding are separated from the between-cylinders communication passages 52e and 54e (or the bridge portion communication passage 30' and the between-cylinder communication passages 52e and 54e) by at least a distance equal to or more than the length of the radius of the shoulder 101A of the large-diameter shaft portion 101 of the welding tool 100 from the center of the remaining hole 80, so that the finish positions 111a and 113a are not aligned with the between-cylinder communication passages 52e and 54e (or the bridge portion communication passage 30' and the between-cylinder communication passages 52e and 54e) in the circumferential direction.

Similarly, the protrusion 117 is formed at a position such that the protrusion 117 is out of alignment in the circumferential direction of the cylinder 59 with the positions where the bridge portion communication passage 30 and the between-cylinder communication passages 52e and 54e in communication with the cylinder 59 are formed if the caliper body 5 will be installed on the left side of a vehicle (positions where the between-cylinder communication passages 52e and 54e in communication with the cylinder 59 are formed if the caliper body 5 will be installed on the right side of a vehicle). As a result, the finish positions 111a and 113a of the friction stir welding are disposed at the outer circumferential side of the cylinder 59 offset from the welding track 112 of the friction stir welding, at a position out of alignment in the circumferential direction of the cylinder 59 with the positions where the bridge portion communication passage 30 and the between-cylinder communication passages 52e and 54e in communication with the cylinder 59 are formed if the caliper body 5 will be installed on the left side of a vehicle (positions where the between-cylinder communication passages 52e and 54e in communication with the cylinder 59 are formed if the caliper body 5 will be installed on the right side of a vehicle). Similarly to the first embodiment, the finish positions 111a and 113a of the friction stir welding are separated from the bridge portion communication passage 30 and the between-cylinders communication passages 52e and 54e (or the between-cylinder communication passages 52e and 54e) by at least a distance equal to or more than the length of the radius of the shoulder 101A of the large-diameter shaft portion 101 of the welding tool 100 from the center of the remaining hole 80, so that the finish positions 111a and 113a are not aligned with the bridge portion communication passage 30 and the between-cylinders communication passages 52e and 54e (or the between-cylinder communication passages 52e and 54e) in the circumferential direction.

According to the disk brake manufactured according to the above-mentioned second embodiment, it is possible to bring about the same advantageous effects as those of the first embodiment.

Further, since the finish positions 111a and 113a of the friction stir welding for the cylinders 57 and 59 arranged at one side of the disk 2 in the disk rotational direction are provided at a same position between the pair of cylinders 57 and 59, it is possible to have only one remaining hole 80 even to the plurality of cylinders 57 and 59.

Further, since the finish positions 111a and 113a of the friction stir welding at the cylinders 57 and 59 are provided at the center of the disk rotational direction of the caliper body 5, it is possible to easily increase the distance between the remaining hole 80 and the bores 52 and 54, and improve the design performance.

### [Third Embodiment]

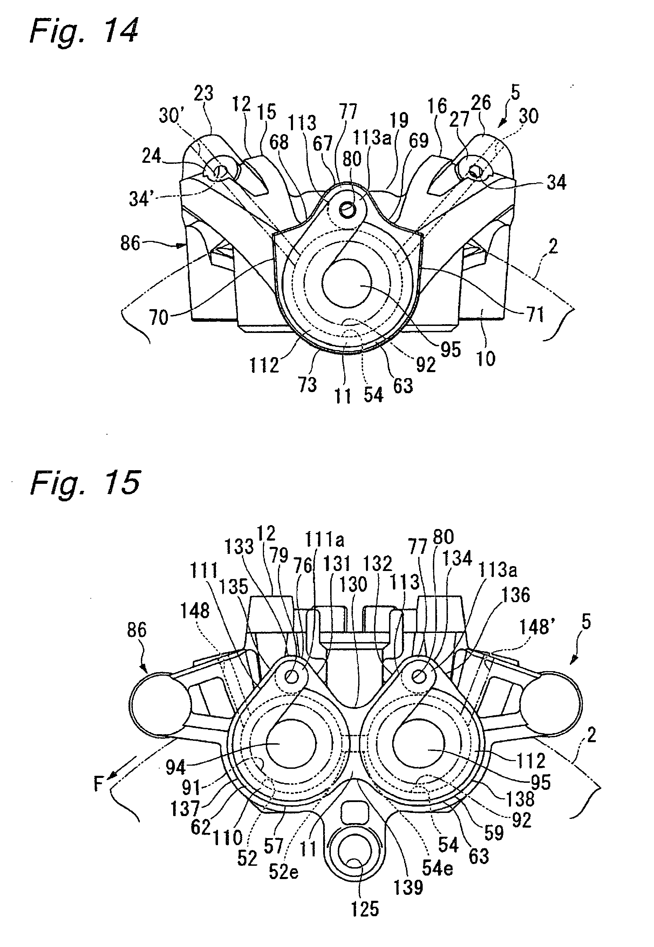

Next, the third embodiment will be described with main reference to Fig. 14, focusing on the difference from the first embodiment.

Fig. 14 is a back view illustrating friction stir welding performed at the caliper body of the disk brake manufactured according to the third embodiment of the present invention. Like elements are identified by the same names and reference numerals as those used in the first embodiment.

The disk brake manufactured according to the third embodiment is used for a two-wheeled vehicle, similarly to the first embodiment.

The disk brake manufactured according to the third embodiment is different from the disk brake manufactured according to the first embodiment, generally in terms of the structure of the third embodiment which does not have the cylinders 56 and 57 at the disk rotation entrance side of the caliper 3. More specifically, the caliper body 5 of the disk brake manufactured according to the third embodiment includes only one bore (not shown) similar to the bore 53 in the first embodiment at the cylinder portion 10 disposed at the disk outer side which is one face side of the disk 2. Further, the caliper body 5 includes only the other one bore 54 at the cylinder portion 11 disposed at the disk inner side which is the other face side of the disk 2. The cylinder portions 10 and 11 are connected through the bridge portion 12. As a result, the caliper of the disk brake of the third embodiment becomes an piston-opposed-type 2 pot caliper comprising a pair of similarly shaped pistons supported so as to face each other through the disk 2.

The bridge portion 12 is constituted by the bridge forming portions 15 and 16 disposed at the respective sides of the disk rotational direction. No bridge forming portion is provided between the bridge forming portions 15 and 16 in the disk rotational direction. Therefore, the bridge portion 12 includes only one opening 19 formed between the bridge forming portions 15 and 16 at the center of the disk rotational direction so as to penetrate in the disk radial direction.

The passage protrusions 23 and 24 are formed at the bridge forming portion 15, and the passage protrusions 26 and 27 are formed at the bridge forming portion 16. If the caliper body 5 is installed at one of the left and right sides of a vehicle, the bridge portion communication passages 30 and 34 extending through the bridge forming portion 16 are formed at the passage protrusions 26 and 27 of the bridge forming portion 16, as indicated by the dotted line and the solid line in Fig. 14. The bridge portion communication passages 30 and 34 formed at the bridge portion 12 intersect with each other in the caliper body 5, and connect the not-shown bore and the bore 54 at the pair of cylinder portions 10 and 11 facing with each other through the disk 2.

The caliper body main part 86 of the caliper body 5 is formed from a same material configured such that the disk rotation entrance side and the disk rotation exit side are symmetrical about the center of the disk rotational direction, regardless of whether the caliper body 5 is installed on the left side or the right side of a vehicle. Therefore, if the caliper body 5 is installed on the other of the left side and the right side of a vehicle, the communication passages 30 and 34 are formed at the passage protrusions 23 and 24 at the bridge forming portion 15 of the caliper body 5, as indicated by the long dashed double-short dashed line in Fig. 14.

The caliper body 5 includes only one pad pin (not shown) disposed so as to bridge a gap between the cylinder portions 10 and 11 along the disk axial direction. The pad pin extends through the outer circumferential side of the disk 2 at the center of the disk rotational direction of the caliper body 5. A not-shown pair of brake pads are supported by this pad pin.

The outer circumferential edge of the opposite end of the cylinder portion 11 from the cylinder portion 10 which has the bottom 63 includes a circular arc portion 67 disposed at the center of the disk rotational direction and at the outer side of the disk radial direction and formed so as to be convexed to the outer side of the disk radial direction. Circular arc portions 68 and 68 are formed at the respective sides of the circular arc portion 67 in the disk rotational direction so as to be slightly concaved to the inner side of the disk radial direction. Linear portions 70 and 71 are formed at the opposite sides of the circular arc portions 68 and 69 from the circular arc portion 66 so as to extend to the inner side of the disk radial direction. The opposite sides of the linear portions 70 and 71 from the circular arc portions 68 and 69 are connected through a circular arc portion 73 convexed to the inner side of the disk radial direction.

The bottom 63 of the cylinder portion 11 has only one protrusion 77 protruding to the outer side of the disk radial direction inside the above-mentioned circular arc portion 67 which is the center of the disk rotational direction. The remaining hole 80 is residually formed at the protrusion 77 by friction stir welding. The protrusion 77 and the remaining hole 80 are disposed on the line passing through the center of the bore 54 and extending along the disk radial direction.

In the third embodiment, similarly, the caliper body 5 is constituted by the caliper body main part 86 prepared by processing an integrally formed material into a shape having the opening 92 at the bottom 63 of the bore 54, and the cover member 95 closing the opening 92 of the caliper body main part 86. The caliper body main part 86 is completed by penetratingly forming the bridge portion communication passages 30 and 34 or 30' and 34' only at predetermined one side of the disk rotational side according to whether the disk brake is installed on the left side or the right side of a vehicle, of the material configured such that the disk rotation entrance side and the disk rotation exit side are symmetrical about the center of the disk rotational direction.

Then, after the cover member 95 is fitted into the opening 92 of the caliper body main part 86, friction stir welding is applied to the connection boundary between the opening 92 and the cover member 95. That is, the tip shaft portion 102 of the rapidly rotating welding tool 100 is continuously moved along the connection boundary between the opening 92 and the cover member 95 in a predetermined direction (the clockwise direction as viewed in Fig. 14), starting from one side of the disk rotational direction of the opening 92, thereby circularly performing friction stir welding throughout the whole circumference of the cover member 95, so that the cover member 95 can be integrally welded to the caliper body main portion 86 at the boundary therebetween. Then, the loop-like welding track 112 of the friction stir welding is formed along the boundary between the cover member 95 and the caliper body main part 86.

Then, after the welding tool 100 is returned to the welding start point at the outer circumference of the cover member 95, the welding tool 100 is linearly moved in the tangential direction of the welding track 112 between the cover member 95 and the caliper body main part 86, and is released to the protrusion 77 protruding to the outer side of the disk radial direction relative to the bottom 63 of the cylinder portion 11. After the welding tool 100 is moved to the center of the disk rotational direction of the caliper body 5, the welding tool 100 is pulled out from the caliper body 5.

This process results in formation of a movement track 113 of the friction stir welding of the welding tool 100 which is continuous from the welding track 112, and linearly extends to the protrusion 77 at the outer side relative to the welding track 112. Further, the remaining hole 80 is formed at a position of the protrusion 77 from where the welding tool 100 is pulled out by the tip shaft portion 102 of the welding tool 100. The remaining hole 80 is formed at the outer side of the outer diameter direction of the welding track 112. That is, the remaining hole 80 does not overlap the welding track 112. Further, the finish position 113a of the friction stir welding at the cylinder portion 11 is disposed at the center of the disk rotational direction of the caliper body 5.

Similarly to the first embodiment, the protrusion 77 is formed at a position such that the protrusion 77 is out of alignment in the circumferential direction of the cylinder portion 11 with the positions where the bridge portion communication passage 30 and 30' in communication with the bore 54 of the cylinder portion 11 are formed regardless of whether the caliper body 5 will be installed on the left or right side of a vehicle. As a result, the finish positions 113a of the friction stir welding is disposed at the outer circumferential side of the cylinder portion 11 offset from the welding track 112 of the friction stir welding, at a position out of alignment in the circumferential direction of the cylinder portion 11 with the positions where the bridge portion communication passages 30 and 30' in communication with the cylinder portion 11 are formed. Similarly to the first embodiment, the finish position 113a of the friction stir welding is separated from the communication passage 30 by at least a distance equal to or more than the length of the radius of the shoulder 101A of the large-diameter shaft portion 101 of the welding tool 100 from the center of the remaining hole 80, so that the finish position 113a is not aligned with the communication passage 30 in the circumferential direction.

According to the disk brake manufactured according to the third embodiment, only one cylinder portion 10 having only one bore is disposed at one face side of the disk 2, and only one cylinder portion 11 having only one bore 54 is disposed at the other face side of the disk 2. The bridge portion 12 is formed at the opposed-type caliper body 5 connecting the cylinders 10 and 11. The bridge portion communication passages 30 and 34 are formed for connecting the cylinders 10 and 11. The third embodiment configured in this way can bring about the same advantageous effects as those of the first embodiment.

Further, the finish position 113a of the friction stir welding at the cylinder 11 is disposed at the center of the disk rotational direction of the caliper body 5, thereby it is possible to improve the design performance.

### [Fourth Embodiment]

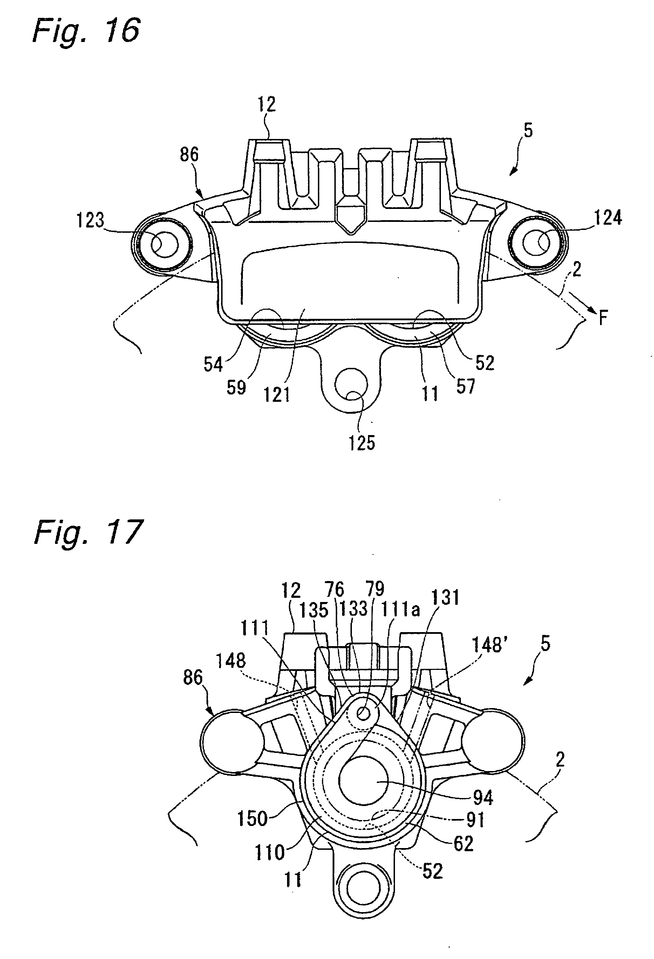

Next, the fourth embodiment of the present invention will be described with main reference to Figs 15 and 16, focusing on the difference from the first embodiment.

Fig. 15 is a front view illustrating friction stir welding performed at the caliper body of the disk brake of the fourth embodiment of the present invention. Fig. 16 is a back view illustrating the caliper body of the disk brake of the fourth embodiment of the present invention. Like elements are identified by the same names and reference numerals as those used in the first embodiment.

The disk brake manufactured according to the fourth embodiment is used for a two-wheeled vehicle, similarly to the first embodiment.

The caliper body 5 of the disk brake of the fourth embodiment has a shape elongated along the disk rotational direction, and is integrally constituted by the cylinder portion 11 disposed at the outer side (the opposite side from the wheel) of the disk 2 unlike the first embodiment, a claw portion 121 having a shape elongated along the disk rotational direction and disposed at the disk inner side (the wheel side), and the bridge portion 12 extending from the outer sides of the disk radial direction of the cylinder portion 11 and the claw portion 121 to the outer circumferential side of the disk 2 and connecting the cylinder portion 11 and the claw portion 121 at the outer side of the radial direction of the disk 2.

As shown in Fig. 16, the cylinder portion 11 includes slide pin holes 123 and 124 formed at the respective sides of the cylinder portion 11 in the disk rotational direction so as to extend along the disk axial direction. Also, a slide pin hole 125 is formed at the center of the disk rotational direction at the inner side of the disk radial direction so as to extend along the disk axial direction. The caliper body 5 is a so-called pin-slide-type caliper supported to the vehicle body side of the vehicle by not-shown slide pins fitted in the slide pin holes 123, 124 and 125 extending along the disk axial direction such that the caliper body 5 is slidable in the disk axial direction. As a whole, the disk brake of the fourth embodiment is a so-called tandem-type pin-slide-type disk brake.

The cylinder portion 11 includes a plurality of bores 52 and 54 open to the disk 2 side arranged in the disk rotational direction. The cylinder 57 is defined by the bore 52, and the cylinder 59 is defined by the bore 54. Similarly shaped pistons are slidably inserted in the bores 52 and 54, respectively.

As a result, the caliper body 5 is a fist type caliper body comprising the cylinder portion 11 including the plurality of cylinders 57 and 59 arranged in the disk rotational direction at one face side of the disk 2, the claw portion 121 disposed at the other face side of the disk 2, and the bridge portion 12 connecting the claw portion 121 and the cylinder portion 11.

As shown in Fig. 15, the outer circumferential edge of the opposite end of the cylinder portion 11 from the claw portion 121 includes a circular arc portion 130 disposed at the center of the disk rotational direction and the outer side of the disk radial direction and concaved to the inner side of the disk radial direction, linear portions 131 and 132 disposed at the respective side of the circular arc portion 130 in the disk rotational direction and extending in a manner inclined to the outer side of the disk radial direction in the direction away from each other, circular arc portions 133 and 134 disposed at the respective sides of the linear portions 131 and 132 in the disk rotational direction and convexed to the outer side of the disk radial direction, linear portions 135 and 136 disposed at the respective sides of the circular arc portions 133 and 134 in the disk rotational direction and extending in a manner inclined to the inner side of the disk radial direction in the direction away from each other, circular arc portions 137 and 138 disposed at the inner side of the disk radial direction of the linear portions 135 and 136 and convexed to the inner side of the disk radial direction, and a circular arc portion 139 connecting the positions of the circular arc portions 137 and 138 nearest to each other and concaved to the outer side of the disk radial direction.

The bottom 62 of the cylinder 57 includes the protrusion 76 inside the above-mentioned circular arc portion 133 which protrudes to the outer side of the disk radial direction. The bottom 63 of the cylinder 59 also includes the protrusion 77 inside the above-mentioned circular portion arc 134 which protrudes to the outer side of the disk radial direction. Similar to the first embodiment, the remaining holes 79 and 80 are residually formed at the protrusions 76 and 77 by friction stir welding, respectively.

Similar to the first embodiment, a line connecting the corresponding protrusion 76 and remaining hole 79 and the center of the bore 52, and a line connecting the corresponding protrusion 77 and remaining hole 80 and the center of the bore 54 are in parallel with and have the same distance from a line connecting the central position of the caliper body 5 in the disk rotational direction and the center of the disk 2. The protrusions 76 and 77 protrude in parallel with each other. The remaining hole 79 is situated at the central position of the circular arc portion 133 defining the protrusion 76, and the remaining hole 80 is situated at the central position of the circular arc portion 134 defining the protrusion 77.

The cylinder portion 11 of the caliper body 5 includes between-cylinder communication passages 52e and 54e formed at a position between the bores 52 and 54 at the both sides. The between-cylinder communication passages 52e and 54e establish communication between the large-diameter inner-diameter portions 52b and 54b of the bores 52 and 54 at the both sides.

Further, a not-shown bleeder plug is attached to one side of the cylinder portion 11 of the caliper body 5 in the disk rotational direction. A bleeder communication passage 148 in communication with the atmosphere is penetratingly formed from the outside at the bore 54 which will become the upper side when the caliper body 5 is installed on a vehicle. The caliper body main part 86 of the caliper body 5 is prepared by penetratingly forming the bleeder communication passage 148 or 148' at a material in which the disk rotation entrance side and the disk rotation exit side are symmetrical about the center of the disk rotational direction, at a predetermined one side of the disk rotational direction according to whether the caliper body 5 will be installed on the left side or right side of a vehicle. In Fig. 15, the bleeder communication passage 148 formed at a position which becomes upper side when the caliper body 5 is installed on the left side of a vehicle is indicated by the dotted line, while the bleeder communication passage 148' formed at a position which becomes upper side when the caliper body 5 is installed on the right side of a vehicle is indicated by the long dashed double-short dashed line.

Also in the fourth embodiment, the caliper body 5 includes the caliper body main part 86 prepared by processing an integrally formed material into a shape having openings 91 and 92 at the bottoms of the bores 52 and 54, and the cover members 94 and 95 closing the openings 91 and 92 of the caliper body main part 86. Similarly to the first embodiment, the cover members 94 and 95 are fitted to the openings 91 and 92 of the caliper body main part 86 and friction stir welding is applied thereto in a similar manner to the first embodiment.

Similarly to the first embodiment, the protrusion 76 is formed at a position such that the protrusion 76 is out of alignment in the circumferential direction of the cylinder 57 with the positions where the between-cylinder communication passages 52e and 54e and the bleeder communication passage 148 in communication with the cylinder 57 are formed if the caliper body 5 is installed on the left side of a vehicle (positions where the between-cylinder communication passages 52e and 54e in communication with the cylinder 57 are formed if the caliper body 5 is installed on the right side of a vehicle). As a result, the finish positions 111a of the friction stir welding is disposed at the outer circumferential side of the cylinder 57 offset from the welding track 110 of the friction stir welding, at a position out of alignment in the circumferential direction of the cylinder 57 with the positions where the between-cylinder communication passages 52e and 54e and the bleeder communication passage 148 in communication with the cylinder 57 are formed if the caliper body 5 is installed on the left side of a vehicle (positions where the between-cylinder communication passages 52e and 54e in communication with the cylinder 57 are formed if the caliper body 5 is installed on the right side of a vehicle) . Similarly to the first embodiment, the finish positions 111a of the friction stir welding is separated from the communication passages 52e, 54e and 148 (or communication passages 52e and 54e) by at least a distance equal to or more than the length of the radius of the shoulder 101A of the large-diameter shaft portion 101 of the welding tool 100 from the center of the remaining hole 79, so that the finish positions 111a is not aligned with the communication passages 52e, 54e and 148 (or communication passages 52e and 54e) in the circumferential direction.

The protrusion 77 is formed at a position such that the protrusion 77 is out of alignment in the circumferential direction of the cylinder 59 with the positions where the between-cylinder communication passages 52e and 54e in communication with the cylinder 59 are formed if the caliper body 5 is installed on the left side of a vehicle (positions where the between-cylinder communication passages 52e and 54e and the bleeder communication passage 148' in communication with the cylinder 59 are formed if the caliper body 5 is installed on the right side of a vehicle). As a result, the finish position 113a of the friction stir welding is disposed at the outer circumferential side of the cylinder 59 offset from the welding track 112 of the friction stir welding, at a position out of alignment in the circumferential direction of the cylinder 59 with the positions where the between-cylinder communication passages 52e and 54e in communication with the cylinder 59 are formed if the caliper body 5 is installed on the left side of a vehicle (positions where the between-cylinder communication passages 52e and 54e and the bleeder communication passage 148' in communication with the cylinder 59 are formed if the caliper body 5 is installed on the right side of a vehicle). Similarly to the first embodiment, the finish position 113a of the friction stir welding is separated from the between-cylinders communication passages 52e and 54e (or the between-cylinder communication passages 52e and 54e and the bleeder communication passage 148 or 148') by at least a distance equal to or more than the length of the radius of the shoulder 101A of the large-diameter shaft portion 101 of the welding tool 100 from the center of the remaining hole 80, so that the finish position 113a is not aligned with the between-cylinders communication passages 52e and 54e (or the between-cylinder communication passages 52e and 54e and the bleeder communication passage 148 or 148') in the circumferential direction.

According to the disk brake manufactured according to the above-mentioned fourth embodiment, the fist type caliper body 5 comprises the cylinder portion 11 including the plurality of cylinders 57 and 59 arranged in the disk rotational direction on one face side of the disk 2, the claw portion 121 disposed at the other face side of the disk 2, and the bridge portion 12 connecting the claw portion 121 and the cylinder portion 11. The caliper body 5 is provided with the bleeder communication passage 148 or 148' and the between-cylinder communication passages 52e and 54e connecting the cylinders 57 and 59 arranged in the disk rotational direction at the one face side of the disk 2. Even this structure can bring about the same advantageous effects as those of the first embodiment.

### [Fifth Embodiment]

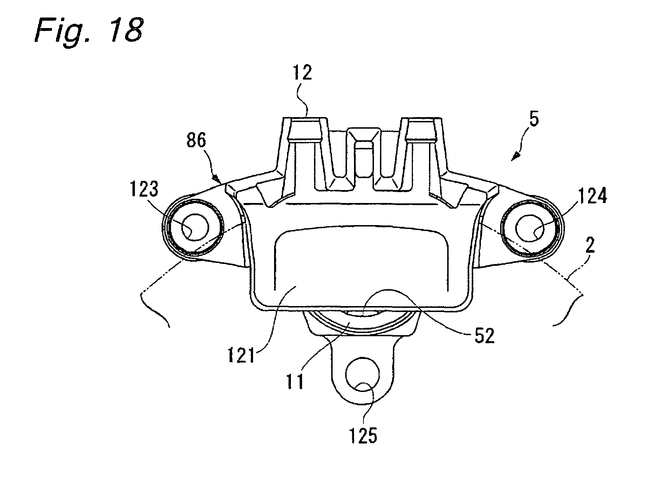

Next, the fifth embodiment will be described with main reference to Figs 17 and 18, focusing on the difference from the fourth embodiment.

Fig. 17 is a front view illustrating friction stir welding performed at the caliper body of the disk brake manufactured according to the fifth embodiment of the present invention. Fig. 18 is a back view illustrating the caliper body of the disk brake manufactured according to the fifth embodiment of the present invention. Like elements are identified by the same names and reference numerals as those used in the fourth embodiment.

The disk brake manufactured according to the fifth embodiment is also used for a two-wheeled vehicle.

The disk brake manufactured according to the fifth embodiment is different from the disk brake manufactured according to the fourth embodiment, generally in terms of the structure manufactured according to the fifth embodiment which does not have the cylinder 59 at one side of the caliper. More specifically, the caliper body 5 of the disk brake manufactured according to the fifth embodiment includes only one bore 52 at the cylinder portion 11 disposed at the disk outer side which is one face side of the disk 2. The bridge portion 12 connects the cylinder portion 11 and the claw portion 121. The disk brake manufactured according to the fifth embodiment is a so-called single-type pin-slide-type disk brake.

The bleeder communication passage 148 establishing communication between the bore 52 and the bleeder plug is formed at one side of the cylinder 11 in the disk rotational direction. The caliper body main part 86 of the caliper body 5 is prepared from a same material regardless of whether the caliper body installed on the left side or the right side of a vehicle. For the caliper body 5 which will be installed on one of the left side and the right side of a vehicle, the bleeder communication passage 148 is formed at the left side of the caliper body main part 86 as viewed in Fig. 17 as indicated by the dotted line. For the caliper body 5 which will be installed on the other of the left side and the right side of a vehicle, the bleeder communication passage 148' is formed at the right side of the caliper body main part 86 as viewed in Fig. 17 as indicated by the long dashed double-short dashed line.

The outer circumferential edge of the opposite end of the cylinder 11 from the claw portion 121 includes a circular arc portion 133 disposed at the center of the disk rotational direction and the outer side of the disk radial direction and convexed to the outer side of the disk radial direction, linear portions 131 and 135 disposed at the respective sides of the circular arc portion 133 in the disk rotational direction and extending in a manner inclined to the inner side of the disk radial direction in the direction away from each other, and a circular arc portion 150 disposed at the inner side of the disk radial direction of the linear portions 131 and 135 and convexed to the inner side of the disk radial direction.

The bottom 62 of the cylinder portion 11 includes only one protrusion 76 at the above-mentioned circular arc portion 133 at the center of the disk rotational direction which protrudes to the outer side of the disk radial direction. The remaining hole 79 is residually formed at the protrusion 76 by friction stir welding. The protrusion 76 and the remaining hole 79 are disposed on the line passing through the center of the bore 52 at the center of the disk rotational direction of the caliper body 5 along the disk radial direction.

Also in the fifth embodiment, the caliper body 5 includes the caliper body main part 86 prepared by processing an integrally formed material into a shape having the opening 91 at the bottom of the bore 52, and the cover member 94 closing the opening 91 of the caliper body main par 86. The caliper body main part 86 is prepared by penetratingly forming the bleeder communication passage 148 or 148' at the material in which the disk rotation entrance side and the disk rotation exit side are symmetrical about the center of the disk rotational direction, at only the disk rotation exist side according to whether the caliper body is installed on the left side or right side of a vehicle.

Then, the cover member 94 is fitted to the opening 91 of the caliper body main part 86, and friction stir welding is applied to the connection boundary therebetween in a similar matter to the fourth embodiment.

As a result, the remaining hole 79 is formed at the outer side of the outer diameter direction of the welding track 110. That is, the remaining hole 79 does not overlap the welding track 110. Further, the finish position 111a of the friction stir welding at the cylinder portion 11 is positioned at the center of the disk rotational direction of the caliper body 5.

Similarly to the fourth embodiment, the protrusion 76 is disposed at a position out of alignment in the circumferential direction of the cylinder portion 11 with the position where the bleeder communication passage 148 in communication with the bore 52 of the cylinder portion 11 is formed. As a result, the finish portion 111a of the friction stir welding is disposed at the outer circumferential side of the cylinder portion 11 offset from the welding track 110 of the friction stir welding, at a position out of alignment in the circumferential direction of the cylinder portion 11 with the position where the bleeder communication passage 148 or 148' in communication with the cylinder portion 11 is formed. More specifically, the finish portion 111a of the friction stir welding is separated from the bleeder communication passage 148 by at least a distance equal to or more than the length of the radius of the shoulder 101A of the large-diameter shaft portion 101 of the welding tool 100 from the center of the remaining hole 79, so that the finish position 111a is not aligned with the bleeder communication passage 148 in the circumferential direction.

According to the disk brake manufactured according to the above-mentioned fifth embodiment, the fist-type caliper body 5 comprises one cylinder portion 11 disposed at one face side of the disk 2, the claw portion 121 disposed at the other face side of the disk 2, and the bridge portion 12 connecting the claw portion 121 and the cylinder portion 11. The bleeder communication passage 148 is formed at the caliper body 5. Even this structure can bring about the same advantageous effects as those of the fourth embodiment.

In the above-mentioned embodiment, "passage in communication with the cylinder" refers to the bridge portion communication passages 30 and 30', the between-cylinder communication passages 52e and 54e, and the bleeder communication passages 148 and 148'.

Further, "position where the passage in communication with the cylinder is formed" (hereinafter abbreviated to "communication passage formed position" includes, in addition to positions where passages are actually formed such as the positions where the bridge communication passage 30, the between-cylinder communication passages 52e and 54e, and the bleeder communication passage 148 are formed, potential positions where passages would be formed if the caliper body is installed on the other of the left and right sides of a vehicle, such as the positions where the bridge portion communication passage 30' and the bleeder communication passage 148' are formed.

## Claims

1. A method of manufacturing a disk brake, the method comprising:
providing a calliper body (5) prepared by integrally forming a cylinder portion (11) and a bridge portion (12), the cylinder portion (11) containing at least one cylinder (57, 59) into which a piston (7, 9) configured to press a pair of brake pads (81, 82, 83, 84) is disposed at the respective sides of a disk configured to rotate together with a wheel of a vehicle, the cylinder portion (11) being disposed on one face side of the disk (2), the bridge portion (12) extending from the cylinder portion (11) to the outer circumferential side of the disk (2),
closing the cylinder (57, 59) disposed at one of the sides of the disk (2) by friction stir welding a cover member (94, 95) to an opening (91, 92) at a bottom portion of the cylinder (57, 59);
**characterized in that**
a finish position (111a, 113a) of the friction stir welding is disposed at a position of the outer circumferential side of the cylinder (57, 59) which is offset from a welding track of the friction stir welding, the position being separated in a circumferential direction of the cylinder (57, 59), from a passage (30, 34, 30', 34', 52e, 54e, 148, 148') in communication with the cylinder (57, 59) by a distance equal to or more than a length of a radius of a shoulder (101A) of a large-diameter shaft portion (101) of a welding tool (100) used for the friction stir welding from a center of a remaining hole (79, 80) of the finish positions (111a, 113a) in the circumferential direction of the cylinder (57, 59),
and that the calliper body (5) is formed from a material configured such that a disk rotation entrance side and a disk rotation exit side are symmetrical about the center of a disk rotation direction so that the same material can be used regardless of whether the disk brake is installed on the left side or right side of the vehicle.

2. The method according to claim 1, wherein:
the calliper body (5) is a fist-type calliper body (5), which is constituted by the cylinder portion (11) disposed at the one face side of the disk (2), the cylinder portion (11) comprising a plurality of cylinders (57, 59) so as to be arranged in the disk rotational direction, the calliper body (5) having a claw portion (121) disposed at the other face side of the disk (2), and the bridge portion (12) connecting the claw portion (121) and the cylinder portion (11);
each of the plurality of the cylinders (57, 59) is closed by friction stir welding the covering members (94, 95) to the openings (91, 92) on the bottom side;
the passage comprises a bleeder communication passage (148, 148') establishing communication between the cylinders (57, 59) and an atmosphere and configured to be closed by a bleeder plug, and a between-cylinder communication passage (52e, 54e) establishing communication between the cylinders (57, 59) arranged at the one face side of the disk (2) so as to be arranged in the disk rotational direction; and
each of the finish positions (111a, 113a) of the friction stir welding at the plurality of the cylinders (57, 59) is disposed at a position of the outer circumferential side of the cylinders (57, 59) which is offset from the welding track of the friction stir welding, the position being separated in the circumferential direction of the cylinders (57, 59) from the bleeder communication passage (148, 148') and the between-cylinder communication passage (52e, 54e), by a distance equal to or more than the length of the radius of the shoulder (101A) of the large-diameter shaft portion (101) of the welding tool (100) from the center of the remaining hole (79, 80) of the finish position (111a, 113a).

3. The method according to claim 1, the calliper body (5) further comprising a second cylinder portion (10),
the cylinder portion (11) and the second cylinder portion (10) being disposed at respective face sides of the disk (2), the cylinder portion (11) at one face side of the disk (2) comprising the plurality of cylinders (57, 59) so as to be arranged in the disk rotational direction, and the second cylinder portion (10) at the other face side of the disk (2) comprising a plurality of cylinders (56, 58) so as to be arranged in the disk rotational direction, the bridge portion (12) connecting the cylinder portion (11) and the second cylinder portion (10) arranged at the respective face sides of the disk (2) so as to constitute the opposed-type calliper body;
each of the plurality of cylinders (57, 59) at the one face side of the disk (2) being closed by friction stir welding the covering members (94, 95) to the openings (91, 92) on the bottom side;
the passage comprising a bridge portion communication passage (30, 34, 30', 34) formed at the bridge portion (12)and establishing communication between one cylinder of the plurality of cylinders (57, 59) at the one face side of the disk and one cylinder of the plurality of cylinders (56, 58) at the other face side of the disk (2) and a between-cylinder communication passage (52e, 54e) establishing communication between the cylinders (57, 59) at the one face side of the disk (2) so as to be arranged in the disk rotational direction,
wherein each of the finish positions (111a, 113a) of the friction stir welding at the plurality of cylinders (57, 59) is disposed at a position of the outer circumferential side of the cylinders (57, 59) which is offset from the welding track of the friction stir welding, the position being separated in the circumferential direction of the cylinders (57, 59) from the bridge portion communication passage (30, 34, 30', 34') and the between-cylinder communication passage (52e, 54e), by a distance equal to or more than the length of the radius of the shoulder (101A) of the large-diameter shaft portion (101) of the welding tool (100) from the center of the remaining hole (79, 80) of the finish positions (111a, 113a).

4. The method according to any of claims 1 to 3, wherein two cylinders (57, 59) are disposed at the cylinder portion (11) at one face side of the disk (2) so as to be arranged in the disk rotational direction, and the finish positions (111a, 113a) of the friction stir welding at the two cylinders (57, 59) are provided at a same position between the two cylinders (57, 59) in the disk rotational direction.

5. The method according to any of claims 1 to 3, wherein two cylinders are disposed at the cylinder portion (11) at one face side of the disk (2) so as to be arranged in the disk rotational direction, and the welding tracks of the friction stir welding at the two cylinders (57, 59) are formed in a same clockwise direction or a same counterclockwise direction.

6. The method according to claim 1, wherein:
the cylinder portion (11) at one face side of the disk (2) comprises one cylinder (52), a claw portion (121) is disposed at the other face side of the disk (2), and the bridge portion (12) connects the claw portion (12) and the cylinder portion (11) so as to constitute a fist-type calliper body;
the passage comprises a bleeder communication passage (148, 148') establishing communication between the cylinder and an atmosphere, and configured to be closed by a bleeder plug; and
the finish position (111a) of the friction stir welding is disposed at a position of the outer circumferential side of the cylinder offset from the welding track of the friction stir welding, the position being separated in the circumferential direction of the cylinder from the bleeder communication passage (148, 148'), by a distance equal to or more than a length of a radius of a shoulder (101A) of a large-diameter shaft portion (101) of a welding tool (100) from a center of a remaining hole (79) of the finish position (111a) in the circumferential direction of the cylinder.

7. The method according to claim 1, the calliper body (5) further comprising a second cylinder portion (10),
the cylinder portion (11) and the second cylinder portion (10) being disposed at respective face sides of the disk (2), the cylinder portion (11) at one face side of the disk (2) comprising one cylinder, and the second cylinder portion (10) at the other face side of the disk (2) comprising one cylinder , the bridge portion (12) connecting the cylinder portion (11) and the second cylinder portion (10) so as to constitute the opposed-type calliper body,
the passage comprising a bridge portion communication passage (30, 34, 30', 34') formed at the bridge portion (12) and establishing communication between the cylinders,
wherein the finish position (113a) of the friction stir welding is disposed at a position of the outer circumferential side of the cylinder offset from a welding track of the friction stir welding, the position being separated in the circumferential direction of the cylinder from the bridge portion communication passage (30, 34, 30', 34') by a distance equal to or more than the length of the radius of the shoulder (101A) of the large-diameter shaft portion (101) of the welding tool (100) from the center of the remaining hole (80) of the finish position (113a).

8. The method according to any one of claims 1 to 7, wherein the finish position (111a, 113a) of the friction stir welding is disposed at the cylinder or the center between the cylinders (57, 59) in the disk rotational direction.

9. The method according to any one of claims 1 to 7, wherein the finish position (111a, 113a) of the friction stir welding is disposed at the bridge portion side in the disk radial direction of the cylinder.

## Patentansprüche

1. Verfahren zum Herstellen einer Scheibenbremse, das Verfahren mit:
dem Bereitstellen eines Sattelkörpers (5), der durch einstückiges Ausbilden eines Zylinderabschnitts (11) und eines Brückenabschnitts (12) vorbereitet ist, wobei der Zylinderabschnitt (11) wenigstens einen Zylinder (57, 59) enthält, in dem ein Kolben (7, 9), der dafür konfiguriert ist, ein Paar Bremsbeläge (81, 82, 83, 84) zu drücken, an den jeweiligen Seiten einer Scheibe vorgesehen ist, die dafür ausgestaltet ist, sich zusammen mit einem Rad eines Fahrzeugs zu drehen, wobei der Zylinderabschnitt (11) an einer Flächenseite der Scheibe (2) vorgesehen ist, wobei sich der Brückenabschnitt (12) von dem Zylinderabschnitt (11) zu der äußeren Umfangsseite der Scheibe (2) erstreckt,
dem Schließen des Zylinders (57, 59), der an einer der Seiten der Scheibe (2) vorgesehen ist, durch Rührreibschweißen eines Abdeckelements (94, 95) auf eine Öffnung (91, 92) an einem unteren Abschnitt des Zylinders (57, 59),
**dadurch gekennzeichnet, dass**
eine Endposition (111a, 113a) des Rührreibschweißens an einer Position der äußeren Umfangsseite des Zylinders (57, 59) vorgesehen ist, die von einer Schweißspur des Rührreibschweißens versetzt ist, wobei die Position in einer Umfangsrichtung des Zylinders (57, 59) von einem Durchlass (30, 34, 30', 34', 52e, 54e, 148, 148') in Verbindung mit dem Zylinder (57, 59) in der Umfangsrichtung des Zylinders (57, 59) mit einem Abstand größer oder gleich einer Länge eines Radius einer Schulter (101A) eines Wellenabschnitts (101) mit großem Durchmesser eines Schweißwerkzeugs (100), welches für das Rührreibschweißen verwendet wird, von einer Mitte eines verbleibenden Lochs (79, 80) der Endpositionen (111a, 113a) getrennt ist,
und dass der Sattelkörper (5) aus einem Material ausgebildet ist, das so konfiguriert ist, dass eine Scheibendrehungs-Eingangsseite und eine Scheibendrehungs-Austrittsseite um die Mitte einer Scheibendrehrichtung symmetrisch sind, sodass das gleiche Material verwendet werden kann, unabhängig davon, ob die Scheibenbremse an der linken Seite oder der rechten Seite des Fahrzeugs eingebaut ist.

2. Verfahren nach Anspruch 1, bei dem:
der Sattelkörper (5) ein Faustsattelkörper (5) ist, der durch den Zylinderabschnitt (11), der an der einen Flächenseite der Scheibe (2) vorgesehen ist, aufgebaut ist, wobei der Zylinderabschnitt (11) mehrere Zylinder (57, 59) so aufweist, dass sie in der Scheibendrehrichtung angeordnet sind, wobei der Sattelkörper (5) einen Umgreifabschnitt (121) aufweist, der an der anderen Flächenseite der Scheibe (2) vorgesehen ist, und wobei der Brückenabschnitt (12) den Umgreifabschnitt (121) und den Zylinderabschnitt (11) verbindet,
wobei jeder der mehreren Zylinder (57, 59) durch Rührreibschweißen der Abdeckelemente (94, 95) auf die Öffnungen (91, 92) auf der unteren Seite geschlossen ist,
wobei der Durchlass einen Ablassverbindungsdurchlass (148, 148'), der eine Verbindung zwischen den Zylindern (57, 59) und einer Umgebung bereitstellt und der dafür konfiguriert ist, durch einen Ablassstöpsel geschlossen zu werden, und einen Verbindungsdurchlass (52e, 54e) zwischen den Zylindern aufweist, der eine Verbindung zwischen den Zylindern (57, 59) bereitstellt, die an der einen Flächenseite der Scheibe (2) so angeordnet sind, dass sie in der Scheibendrehrichtung angeordnet sind, und
wobei jede der Endpositionen (111a, 113a) des Rührreibschweißens bei den mehreren Zylindern (57, 59) an einer Position der äußeren Umfangsseite der Zylinder (57, 59) vorgesehen ist, die von der Schweißspur des Rührreibschweißens versetzt ist, wobei die Position in der Umfangsrichtung der Zylinder (57, 59) von dem Ablassverbindungsdurchlass (148, 148') und dem Verbindungsdurchlass (52e, 54e) zwischen den Zylindern mit einem Abstand größer oder gleich der Länge des Radius der Schulter (101A) des Wellenabschnitts (101) mit großem Durchmesser des Schweißwerkzeugs (100) von der Mitte des verbleibenden Lochs (79, 80) der Endposition (111a, 113a) getrennt ist.

3. Verfahren nach Anspruch 1, wobei der Sattelkörper (5) ferner einen zweiten Zylinderabschnitt (10) aufweist, wobei der Zylinderabschnitt (11) und der zweite Zylinderabschnitt (10) an jeweiligen Flächenseiten der Scheibe (2) vorgesehen sind, wobei der Zylinderabschnitt (11) an einer Flächenseite der Scheibe (2) mehrere Zylinder (57, 59) so aufweist, dass sie in der Scheibendrehrichtung angeordnet sind, und der zweite Zylinderabschnitt (10) an der anderen Flächenseite der Scheibe (2) mehrere Zylinder (56, 58) so aufweist, dass sie in der Scheibendrehrichtung angeordnet sind, wobei der Brückenabschnitt (12), der den Zylinderabschnitt (11) und den zweiten Zylinderabschnitt (10) verbindet, an den jeweiligen Flächenseiten der Scheibe (2) so angeordnet ist, dass er den Sattelkörper vom gegenüberliegenden Typ bildet,
wobei jeder der mehreren Zylinder (57, 59) an der einen Flächenseite der Scheibe (2) durch Rührreibschweißen der Abdeckelemente (94, 95) auf die Öffnungen (91, 92) an der unteren Seite geschlossen ist,
wobei der Durchlass einen Brückenabschnittverbindungsdurchlass (30, 34, 30', 34'), der an dem Brückenabschnitt (12) ausgebildet ist und der eine Verbindung zwischen einem Zylinder der mehreren Zylinder (57, 59) an der einen Flächenseite der Scheibe und einem Zylinder der Zylinder (56, 58) an der anderen Flächenseite der Scheibe (2) bereitstellt, und einen Verbindungsdurchlass (52e, 54e) zwischen den Zylindern aufweist, der eine Verbindung zwischen den Zylindern (57, 59) an der einen Flächenseite der Scheibe (2) bereitstellt, die in der Scheibendrehrichtung angeordnet sind,
wobei jede der Endpositionen (111a, 113a) des Rührreibschweißens bei den mehreren Zylindern (57, 59) an einer Position der äußeren Umfangsseite der Zylinder (57, 59) vorgesehen ist, die von der Schweißspur des Rührreibschweißens versetzt ist, wobei die Position in der Umfangsrichtung der Zylinder (57, 59) von dem Brückenabschnittverbindungsdurchlass (30, 34, 30', 34') und dem Verbindungsdurchlass (52e, 54e) zwischen den Zylindern mit einem Abstand größer oder gleich der Länge des Radius der Schulter (101A) des Wellenabschnitts (101) mit großem Durchmesser des Schweißwerkzeugs (100) von der Mitte des verbleibenden Lochs (79, 80) der Endpositionen (111a, 113a) getrennt ist.

4. Verfahren nach einem der Ansprüche 1 bis 3, bei dem zwei Zylinder (57, 59) an dem Zylinderabschnitt (11) an einer Flächenseite der Scheibe (2) so vorgesehen sind, dass sie in der Scheibendrehrichtung angeordnet sind, und wobei die Endpositionen (111a, 113a) des Rührreibschweißens bei den zwei Zylindern (57, 59) an einer gleichen Position zwischen den zwei Zylindern (57, 59) in der Scheibendrehrichtung vorgesehen sind.

5. Verfahren nach einem der Ansprüche 1 bis 3, bei dem zwei Zylinder bei dem Zylinderabschnitt (11) an einer Flächenseite der Scheibe (2) so vorgesehen sind, dass sie in der Scheibendrehrichtung angeordnet sind, und wobei die zwei Schweißspuren des Rührreibschweißens bei den zwei Zylindern (57, 59) in einem gleichen Uhrzeigersinn oder einem gleichen Gegenuhrzeigersinn ausgebildet sind.

6. Verfahren nach Anspruch 1, bei dem:
der Zylinderabschnitt (11) an einer Flächenseite der Scheibe (2) einen Zylinder (52) aufweist, wobei ein Umgreifabschnitt (12) an der anderen Flächenseite der Scheibe (2) vorgesehen ist, und wobei der Brückenabschnitt (12) den Umgreifabschnitt (12) und den Zylinderabschnitt (11) so verbindet, dass er einen Faustsattelkörper bildet,
wobei der Durchlass einen Ablassverbindungsdurchlass (148, 148') aufweist, der eine Verbindung zwischen dem Zylinder und einer Umgebung bereitstellt und der konfiguriert ist, um durch einen Ablassstöpsel verschlossen zu werden, und
wobei die Endposition (111a) des Rührreibschweißens an einer Position der äußeren Umfangsseite des Zylinders vorgesehen ist, die von der Schweißspur des Rührreibschweißens versetzt ist, wobei die Position in der Umfangsrichtung des Zylinders von dem Ablassverbindungsdurchlass (148, 148') mit einem Abstand größer oder gleich einer Länge eines Radius einer Schulter (101A) eines Wellenabschnitts (101) mit großem Durchmesser eines Schweißwerkzeugs (100) von einer Mitte eines verbleibenden Lochs (79) der Endposition (111a) in der Umfangsrichtung des Zylinders getrennt ist.

7. Verfahren nach Anspruch 1, wobei der Sattelkörper (5) ferner einen zweiten Zylinderabschnitt (10) aufweist,
wobei der Zylinderabschnitt (11) und der zweite Zylinderabschnitt (10) an jeweiligen Flächenseiten der Scheibe (2) vorgesehen sind, wobei der Zylinderabschnitt (11) an einer Flächenseite der Scheibe (2) einen Zylinder aufweist und der zweite Zylinderabschnitt (10) an der anderen Flächenseite der Scheibe (2) einen Zylinder aufweist, wobei der Brückenabschnitt (12) den Zylinderabschnitt (11) und den zweiten Zylinderabschnitt (10) so verbindet, dass sie den Sattelkörper vom gegenüberliegenden Typ bilden,
wobei der Durchlass einen Brückenabschnittverbindungsdurchlass (30, 34, 30', 34') aufweist, der an dem Brückenabschnitt (12) ausgebildet ist und eine Verbindung zwischen den Zylindern bereitstellt,
wobei die Endposition (113a) des Rührreibschweißens an einer Position der äußeren Umfangsseite des Zylinders vorgesehen ist, die von einer Schweißspur des Rührreibschweißens versetzt ist, wobei die Position in der Umfangsrichtung des Zylinders von dem Brückenabschnittverbindungsdurchlass (30, 34, 30', 34') mit einem Abstand größer oder gleich der Länge des Radius der Schulter (101A) des Wellenabschnitts (101) mit großem Durchmesser des Schweißwerkzeugs (100) von der Mitte des verbleibenden Lochs (80) der Endposition (113a) getrennt ist.

8. Verfahren nach einem der Ansprüche 1 bis 7, bei dem die Endposition (111a, 113a) des Rührreibschweißens an dem Zylinder oder der Mitte zwischen den Zylindern (57, 59) in der Scheibendrehrichtung vorgesehen ist.

9. Verfahren nach einem der Ansprüche 1 bis 7, bei dem die Endposition (111a, 113a) des Rührreibschweißens an der Brückenabschnittsseite in der Scheibenradialrichtung des Zylinders vorgesehen ist.

## Revendications

1. Procédé de fabrication d'un frein à disque, le procédé comprenant :
la fourniture d'un corps d'étrier (5) préparé en formant d'un seul tenant une partie formant cylindre (11) et une partie formant pont (12), la partie formant cylindre (11) contenant au moins un cylindre (57, 59) dans lequel un piston (7, 9) configuré pour presser un couple de plaquettes de frein (81, 82, 83, 84) est disposé au niveau de côtés respectifs d'un disque configuré pour tourner en même temps qu'une roue d'un véhicule, la partie formant cylindre (11) étant disposée sur un côté face du disque (2), la partie formant pont (12) s'étendant depuis la partie formant cylindre (11) jusqu'au côté circonférentiel extérieur du disque (2),
la fermeture du cylindre (57, 59) disposé au niveau d'un des côtés du disque (2) en soudant par friction malaxage un élément formant couvercle (94, 95) à une ouverture (91, 92) au niveau d'une partie de fond du cylindre (57, 59) ;
**caractérisé en ce que**
une position de fin (111a, 113a) du soudage par friction malaxage est disposée au niveau d'une position du côté circonférentiel extérieur du cylindre (57, 59) qui est décalée par rapport à une trace de soudure du soudage par friction malaxage, la position étant séparée dans une direction circonférentielle du cylindre (57, 59), d'un passage (30, 34, 30', 34', 52e, 54e, 148, 148') en communication avec le cylindre (57, 59) par une distance supérieure ou égale à une longueur d'un rayon d'un épaulement (101A) d'une partie d'arbre de grand diamètre (101) d'un outil de soudage (100) utilisé pour le soudage par friction malaxage à partir d'un centre d'un trou restant (79, 80) des positions de fin (111a, 113a) dans la direction circonférentielle du cylindre (57, 59),
et **en ce que** le corps d'étrier (5) est formé d'une matière configurée de sorte qu'un côté entrée de rotation de disque et un côté sortie de rotation de disque sont symétriques autour du centre d'une direction de rotation de disque de sorte que la même matière peut être utilisée indépendamment du fait que le frein à disque est installé du côté gauche ou du côté droit du véhicule.

2. Procédé selon la revendication 1, dans lequel :
le corps d'étrier (5) est un corps d'étrier à griffe (5), qui est constitué par la partie formant cylindre (11) disposée au niveau du côté face du disque (2), la partie formant cylindre (11) comprenant une pluralité de cylindres (57, 59) afin d'être agencée dans la direction de rotation de disque, le corps d'étrier (5) ayant une partie formant mâchoire (121) disposée au niveau du côté autre face du disque (2), et la partie formant pont (12) reliant la partie formant mâchoire (121) et la partie formant cylindre (11) ;
chaque cylindre de la pluralité des cylindres (57, 59) est fermé en soudant par friction malaxage les éléments de couverture (94, 95) aux ouvertures (91, 92) sur le côté fond ;
le passage comprend un passage de communication de purgeur (148, 148') établissant une communication entre les cylindres (57, 59) et l'atmosphère et configuré pour être fermé par un bouchon de purgeur, et un passage de communication entre cylindres (52e, 54e) établissant une communication entre les cylindres (57, 59) agencé au niveau du côté face du disque (2) afin d'être agencé dans la direction de rotation de disque ; et
chacune des positions de fin (111a, 113a) du soudage par friction malaxage au niveau de la pluralité des cylindres (57, 59) est disposée à une position du côté circonférentiel extérieur des cylindres (57, 59) qui est décalée par rapport à la trace de soudure du soudage par friction malaxage, la position étant séparée dans la direction circonférentielle des cylindres (57, 59) du passage de communication de purgeur (148, 148') et du passage de communication entre cylindres (52e, 54e), par une distance supérieure ou égale à la longueur du rayon de l'épaulement (101A) de la partie d'arbre de grand diamètre (101) de l'outil de soudage (100) à partir du centre du trou restant (79, 80) de la position de fin (111a, 113a).

3. Procédé selon la revendication 1, le corps d'étrier (5) comprenant en outre une seconde partie formant cylindre (10),
la partie formant cylindre (11) et la seconde partie formant cylindre (10) étant disposées au niveau de côtés face respectifs du disque (2), la partie formant cylindre (11) au niveau d'un côté face du disque (2) comprenant la pluralité de cylindres (57, 59) afin d'être agencée dans la direction de rotation de disque et la seconde partie formant cylindre (10) au niveau du côté autre face du disque (2) comprenant une pluralité de cylindres (56, 58) afin d'être agencée dans la direction de rotation de disque, la partie formant pont (12) reliant la partie formant cylindre (11) et la seconde partie formant cylindre (10) agencées au niveau de côtés face respectifs du disque (2) afin de constituer le corps d'étrier de type opposé ;
chaque cylindre de la pluralité de cylindres (57, 59) au niveau du côté face du disque (2) étant fermé en soudant par friction malaxage les éléments de couverture (94, 95) aux ouvertures (91, 92) sur le côté fond ;
le passage comprenant un passage de communication de partie formant pont (30, 34, 30', 34) formé au niveau de la partie formant pont (12) et établissant une communication entre un cylindre de la pluralité de cylindres (57, 59) au niveau du côté face du disque et un cylindre de la pluralité de cylindres (56, 58) au niveau du côté autre face du disque (2) et un passage de communication entre cylindres (52e, 54e) établissant une communication entre les cylindres (57, 59) au niveau d'un côté face du disque (2) afin d'être agencé dans la direction de rotation de disque,
dans lequel chacune des positions de fin (111a, 113a) du soudage par friction malaxage au niveau de la pluralité de cylindres (57, 59) est disposée à une position du côté circonférentiel extérieur des cylindres (57, 59) qui est décalée par rapport à la trace de soudure du soudage par friction malaxage, la position étant séparée dans la direction circonférentielle des cylindres (57, 59) du passage de communication de partie formant pont (30, 34, 30', 34') et du passage de communication entre cylindres (52e, 54e), par une distance supérieure ou égale à la longueur du rayon de l'épaulement (101A) de la partie d'arbre de grand diamètre (101) de l'outil de soudage (100) à partir du centre du trou restant (79, 80) des positions de fin (111a, 113a).

4. Procédé selon l'une quelconque des revendications 1 à 3, dans lequel deux cylindres (57, 59) sont disposés au niveau de la partie formant cylindre (11) au niveau du côté face du disque (2) afin d'être agencés dans la direction de rotation de disque, et les positions de fin (111a, 113a) du soudage par friction malaxage au niveau des deux cylindres (57, 59) sont disposées à une même position entre les deux cylindres (57, 59) dans la direction de rotation de disque.

5. Procédé selon l'une quelconque des revendications 1 à 3, dans lequel deux cylindres sont disposés au niveau de la partie formant cylindre (11) au niveau du côté face du disque (2) afin d'être agencés dans la direction de rotation de disque, et les traces de soudure du soudage par friction malaxage au niveau des deux cylindres (57, 59) sont formées dans le même sens des aiguilles d'une montre ou dans le même sens inverse des aiguilles d'une montre.

6. Procédé selon la revendication 1, dans lequel :
la partie formant cylindre (11) au niveau du côté face du disque (2) comprend un cylindre (52), une partie formant mâchoire (121) est disposée au niveau du côté autre face du disque (2), et la partie formant pont (12) relie la partie formant mâchoire (12) et la partie formant cylindre (11) afin de constituer un corps d'étrier à griffe ;
le passage comprend un passage de communication de purgeur (148, 148') établissant une communication entre le cylindre et l'atmosphère et configuré pour être fermé par un bouchon de purgeur ; et
la position de fin (111a) du soudage par friction malaxage est disposée à une position du côté circonférentiel extérieur du cylindre décalée par rapport à la trace de soudure du soudage par friction malaxage, la position étant séparée dans la direction circonférentielle du cylindre du passage de communication de purgeur (148, 148'), par une distance supérieure ou égale à une longueur d'un rayon d'un épaulement (101A) d'une partie d'arbre de grand diamètre (101) d'un outil de soudage (100) à partir d'un centre d'un trou restant (79) de la position de fin (111a) dans la direction circonférentielle du cylindre.

7. Procédé selon la revendication 1, le corps d'étrier (5) comprenant en outre une seconde partie formant cylindre (10),
la partie formant cylindre (11) et la seconde partie formant cylindre (10) étant disposées au niveau de côtés face respectifs du disque (2), la partie formant cylindre (11) au niveau du côté face du disque (2) comprenant un cylindre, et la seconde partie formant cylindre (10) au niveau du côté autre face du disque (2) comprenant un cylindre, la partie formant pont (12) reliant la partie formant cylindre (11) et la seconde partie formant cylindre (10) afin de constituer le corps d'étrier de type opposé,
le passage comprenant un passage de communication de partie formant pont (30, 34,. 30', 34') formé au niveau de la partie formant pont (12) et établissant une communication entre les cylindres,
dans lequel la position de fin (113a) du soudage par friction malaxage est disposée à une position du côté circonférentiel extérieur du cylindre décalée par rapport à une trace de soudure du soudage par friction malaxage, la position étant séparée dans la direction circonférentielle du cylindre du passage de communication de partie formant pont (30, 34, 30', 34') par une distance supérieure ou égale à la longueur du rayon de l'épaulement (101A) de la partie d'arbre de grand diamètre (101) de l'outil de soudage (100) à partir du centre du trou restant (80) de la position de fin (113a).

8. Procédé selon l'une quelconque des revendications 1 à 7, dans lequel la position de fin (111a, 113a) du soudage par friction malaxage est disposée au niveau du cylindre ou au niveau du centre entre les cylindres (57, 59) dans la direction de rotation de disque.

9. Procédé selon l'une quelconque des revendications 1 à 7, dans lequel la position de fin (111a, 113a) du soudage par friction malaxage est disposée au niveau du côté partie formant pont dans la direction radiale de disque du cylindre.
